**Europäisches Patentamt**

**European Patent Office**

**Office européen des brevets**

(19)

(11) Veröffentlichungsnummer: **0 010 194**
**B1**

(12)

# EUROPÄISCHE PATENTSCHRIFT

(45) Veröffentlichungstag der Patentschrift:
**13.04.83**

(51) Int. Cl.³: **G 06 F 11/00,** G 06 F 15/16,
G 06 F 3/04

(21) Anmeldenummer: **79103610.6**

(22) Anmeldetag: **24.09.79**

(54) **Wartungsschnittstelleneinrichtung für eine datenverarbeitende Anlage mit einer zentralen Verarbeitungseinheit und mit einem Dienstprozessor und Verfahren zu ihrem Betrieb.**

(30) Priorität: **23.10.78 US 953673**

(43) Veröffentlichungstag der Anmeldung:
**30.04.80 Patentblatt 80/9**

(45) Bekanntmachung des Hinweises auf die Patenterteilung:
**13.04.83 Patentblatt 83/15**

(84) Benannte Vertragsstaaten:
**DE FR GB**

(56) Entgegenhaltungen:
**DE-A-2 715 983**
**DE-A-2 726 753**
**DE-A-2 826 079**
**US-A-4 023 142**
**US-A-4 144 448**

(73) Patentinhaber: **International Business Machines Corporation, Armonk, N.Y. 10504 (US)**

(72) Erfinder: **Berglund, Neil Clair, Rt. 1, Box 74H, Kasson, MN 55901 (US)**
Erfinder: **Nieling, James Robert, 2006 Telemark Lane, Rochester, MN 55901 (US)**

(74) Vertreter: **Möhlen, Wolfgang C., Dipl.-Ing., Säumerstrasse 4, CH-8803 Rüschlikon (CH)**

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

# Wartungsschnittstelleneinrichtung für eine datenverarbeitende Anlage mit einer zentralen Verarbeitungseinheit und mit einem Dienstprozessor und Verfahren zu ihrem Betrieb

Die Erfindung betrifft eine Wartungsschnittstelleneinrichtung für eine datenverarbeitende Anlage mit einer zentralen Verarbeitungseinheit und mit einem Dienstprozessor, insbesondere eine Wartungsschnittstelleneinrichtung, welche es ermöglicht, die Operationen eines Dienstprozessors und einer Zentraleinheit zu synchronisieren.

Beim Entwurf von datenverarbeitenden Systemen muß man eine Möglichkeit der Steuerung von außen vorsehen. Man sollte die Anlage beliebig in Betrieb setzen oder stoppen können, sowie eine Möglichkeit der Darstellung auf einem Bildschirm oder auf einer anderen Ausgabe haben, um die Arbeitsabläufe in der Zentraleinheit sichtbar machen zu können. Das ist notwendig sowohl für den Benutzer als auch den Entwicklungsingenieur oder den Programmierer, sowie für alles Personal, das mit dem Betrieb oder der Wartung der datenverarbeitenden Anlage zu tun hat.

Eine bekannte Möglichkeit besteht in einer Konsole, d. h. einem Steuerpult mit Schaltern, Kontrollampen und ähnlichem, die mit der Zentraleinheit fest verdrahtet sind. Man hat dadurch Zugang zu den Arbeitsregistern über Schalter und kann auch deren Dateninhalt durch Anzeigelampen darstellen. Bei großen Systemen besteht eine weitere Möglichkeit darin, einen separaten Mikroprozessor vorzusehen, der einen großen Teil der Aufgaben für die Verwaltung und Überwachung der Anlage selbsttätig übernehmen kann. Eine dieser Funktionen ist beispielsweise die Steuerung der Zentraleinheit einschließlich der Möglichkeit, ihre Arbeitsabläufe darzustellen oder zu verändern. Der separate Mikroprozessor oder Dienstprozessor (SP) ist mit Leitungsverbindungen zu der Zentraleinheit versehen, um über ein angeschlossenes Bildschirmgerät Daten zu empfangen oder zu senden. Außerdem bestehen Steuerleitungen, um Arbeitsabläufe beginnen oder beenden zu können.

Aus der DE-A-2 715 983 ist auch eine Datenverarbeitungsanlage mit zentralem Prozessor und angeschlossenem Dienstprozessor bekannt. In dieser Anlage sind aber keine besonderen Maßnahmen zur Anpassung des Datenaustausches zwischen beiden Prozessoren gezeigt, wenn diese asynchron zueinander arbeiten. Es ist also nicht gezeigt, wie Kollisionssituationen, d. h. Situationen, in denen beide Prozessoren an der Schnittstelle einander störende Operationen verlangen, bewältigt werden können. Des weiteren enthält diese bekannte DV-Anlage keine besonderen Einrichtungen, um mit Hilfe des Dienstprozessors Testvorgänge nach dem LSSD-Prinzip, d. h. durch schieberegisterartigen Betrieb sonst separat arbeitender Elemente, ablaufen zu lassen.

Wo die Schnittstelle zwischen dem Benutzer einer Anlage und der Zentraleinheit durch einen Dienstprozessor überwacht wird, ist auch eine Schnittstelleneinrichtung notwendig, weil der Dienstprozessor gewöhnlich asynchron und wesentlich langsamer als die Zentraleinheit arbeitet. Trotz dieser nicht-synchronen Arbeitsweise muß der Dienstprozessor jedoch fähig sein, die Zentraleinheit exakt steuern zu können. Der Dienstprozessor sollte aber auch ermöglichen, die Anlage zu testen und gewisse Wartungsarbeiten auszuführen.

Wenn die Zentraleinheit in Großintegrationstechnik hergestellt ist, sind die meisten Schaltungspunkte unzugänglich, weil sie irgendwo mitten in einem Halbleiterplättchen begraben sind. Die große Schaltungsdichte von Halbleiterschaltungen erschwert das Testen. Deshalb wendet man gerne die wartungsfreundliche sogenannte LSSD-Bauweise an, eine Schiebeschaltungsbauweise, welche die Diagnose von Schaltungen erheblich erleichtert. Eine Wartungsschnittstelleneinrichtung sollte nach Möglichkeit auch in dieser Bauweise ausgeführt sein, um mit dem übrigen datenverarbeitenden System kompatibel zu sein. Der Grundgedanke der LSSD-Bauweise ist die Verwendung von Kippgliedern in der Schaltung, die für Testzwecke in der Art eines Schieberegisters hintereinander geschaltet werden können. In diesem Zusammenhang wird auf die US-PS 4 023 142 verwiesen.

Die neue Wartungsschnittstelleneinrichtung und das Verfahren zu ihrem Betrieb sind durch die Merkmale gemäß den Patentansprüchen 1 und 6 gekennzeichnet.

Die Erfindung wird anhand von Ausführungsbeispielen mit Hilfe der Zeichnungen näher erläutert.

Fig. 1 ist ein Blockschaltbild zur Erläuterung eines datenverarbeitenden Systems, welches die erfindungsgemäße Wartungsschnittstelleneinrichtung enthält,

Fig. 2 ist ein Blockschaltbild der Zentraleinheit einschließlich der Schnittstellensteuerschaltung, dem Mikroprozessor, der Eingabe/Ausgabe-Kanalsteuerung und der Hauptspeichersteuerung,

Fig. 3 veranschaulicht eine Kippschaltung als Grundbaustein für viele Schaltungen, die sowohl Funktionen in der Einrichtung ausführen können als auch für das Testen nach dem LSSD-Prinzip geeignet sind,

Fig. 4 zeigt die Verbindung von vier solchen Kippgliedern, die für normale Betriebsweise oder in der Art einer Schiebeschaltung für die Diagnose geschaltet sind,

Fig. 5 ist ein Blockschaltbild, das einen Teil der Schnittstellensteuerschaltung aus der Fig. 2 veranschaulicht, der sowohl das serielle Einlesen und Auslesen von Daten als auch das Testen der Schaltung ermöglicht,

Fig. 6 veranschaulicht als Blockschaltbild die Verbindungen zwischen dem Schnittstellenregister SI und dem Schnittstellenpufferregister SIB des Dienstprozessors,

Fig. 7a und 7b sind Datenflußdiagramme der Wartungsschnittstelleneinrichtung für den Datenverkehr zwischen dem Dienstprozessor und der Schnittstellensteuerschaltung,

Fig. 8 ist ein Blockschaltbild mit den Kippgliedern der Schnittstellensteuerschaltung, die für die Verarbeitung der Instruktion »CPU Anforderung« und für die Synchronisation gebraucht werden,

Fig. 9 ist ein Blockdiagramm der Schaltung zum Decodieren von Befehlen,

Fig. 10 ist ein Blockschaltbild mit Kippgliedern, die zum Abschalten einzelner Schaltungsteile und für die Verteilung von Taktsignalen dienen,

Fig. 11 zeigt die Schaltung für die Erzeugung von Zeitgebersignalen für den Mikroprozessor,

Fig. 12 zeigt verschiedene Signale als Zeitablaufdiagramme,

Fig. 13 zeigt Ausschnitte aus der Schnittstellensteuerschaltung,

Fig. 14 ist eine Zusammenfassung der Befehle im Schnittstellenregister vom Dienstprozessor an die zentrale Verarbeitungseinheit.

Es folgt zunächst eine Aufstellung von häufig gebrauchten Begriffen, Abkürzungen von Befehlen und Definitionen.

SP — Dienstprozessor.

CPU — die zentrale Verarbeitungseinheit oder Zentraleinheit enthält die Schnittstellensteuerschaltung, den Mikroprozessor, die Kanalsteuerung und die Hauptspeichersteuerung.

HMC — der horizontale Mikrocode besteht aus dem Mikroprogramm oder aus Mikrobefehlen, welche fest verdrahtet in der Zentraleinheit laufen.

MP — der Mikroprozessor ist jener Teil der Zentraleinheit, der die Mikrobefehle holt und ausführt.

MS — der Hauptspeicher enthält sowohl Benutzerprogramme und Daten als auch Dienstprogramme und entsprechende Daten.

CHAN — die Kanalsteuerung kontrolliert die Leitungen an der Eingabe/Ausgabe-Kanalschnittstelle.

LSSD — (Level Sensitive Scan Design). Die LSSD-Bauweise ist eine diagnosefreundliche Schiebeschaltungsbauweise, bei der alle Kippglieder zu Schieberegistern verbunden sind. Auf diese Weise können vorgegebene Bitmuster seriell durch alle Kippglieder geschoben werden. Auch die Zentraleinheit ist in gleicher Art aufgebaut.

SI — Schnittstellenregister. Dieses 20 Bit breite Register ist die am meisten für die Datenübertragung gebrauchte Einrichtung der Schnittstellensteuerschatung. Es ist von Hause aus ein Schieberegister in LSSD-Bauweise und es wird dafür gebraucht, Befehle und Daten zwischen dem Dienstprozessor und der Zentraleinheit zu übertragen.

SIB — Schnittstellen-Pufferregister. Dieses 16 Bit breite Register wird zusammen mit dem Schnittstellenregister dazu verwendet, Information vom Mikroprozessor zum Dienstprozessor zu übertragen.

SRL — (Shift Register Latch). Das Schieberegister-Kippglied ist ein einzelnes bistabiles Speicherelement in LSSD-Bauweise.

MSC — die Hauptspeichersteuerung ist der Teil der Zentraleinheit, welcher den Zugriff zu im Hauptspeicher gespeicherten Daten und das Wiederauffrischen des Speicherinhaltes steuert.

ALU — die arithmetische logische Einheit ist das Rechenwerk für die Ausführung von Rechenoperationen für die Zentraleinheit.

CSAR — ist das Adressenregister für den Steuerspeicher.

CSOR — ist das Ausgaberegister für den Steuerspeicher.

SDO — das Signal »Datenausgabe« leitet Daten seriell von Schieberegistern der Zentraleinheit zum Dienstprozessor.

SDI — das Signal »Dateneingabe« leitet Daten seriell vom Dienstprozessor zur zentralen Verarbeitungseinheit.

DIAGN ADR — (4 Signale). Wenn decodiert, wählt eines dieser Signale »Diagnostische Adresse« diejenige Ringschiebeschaltung (Mikroprozessor, Kanal, Hauptspeicher, Schnittstellenregister) aus, die Schiebeimpulse und Daten erhalten soll von SDI oder ausliefern soll an SDO.

A-Takt — dies ist ein Schiebeimpuls, der allen L1-Kippgliedern in dem datenverarbeitenden System zugeführt wird, die nach dem LSSD-Prinzip aufgebaut sind.

B-Takt — dies ist ein Schiebeimpuls, der allen L2-Kippgliedern in dem datenverarbeitenden System zugeführt wird, die nach dem LSSD-Prinzip aufgebaut sind.

SP ANF — dieses Anforderungssignal wird vom Dienstprozessor eingeschaltet, wenn er das Einschieben eines Befehles in das Schnittstellenregister SI beendet hat. Die Schnittstellensteuerschaltung decodiert den Befehl im Schnittstellenregister, wenn sie erkennt, daß dieses Signal eingeschaltet ist.

SP QU — dieses Quittungssignal wird von der Schnittstellensteuerschaltung als Quittung auf den Empfang eines Befehles vom Dienstprozessor gegeben.

CPU ANF — dieses Anforderungssignal von der Schnittstellensteuerschaltung zeigt an, daß das Schnittstellen-Pufferregister mit einer Botschaft geladen ist, welche an den Dienstprozessor weitergegeben werden muß.

SI UNG — dieses Signal, das quittiert werden muß, wird verwendet, um anzuzeigen, daß der Befehl ungültig oder in falscher Reihenfolge ist.

TAKT FREI — diese Taktfreigabebefehle werden dazu benutzt, die an jeden Funktionsbereich der Zentraleinheit gehenden Taktsignale zu starten oder zu beenden. Die Taktsignale werden deshalb nach Funktionsbereichen gesteuert, damit die Kippschaltungen eines Funktionsbereiches durchgemustert oder abgefragt werden können, während ein anderer Funktionsbereich nach seiner vorgesehenen Betriebsweise arbeiten kann. Die Kippschaltungen für die Taktfreigabe werden mit den Taktsignalen an jeden Funktionsbereich synchronisiert, um eine Außerbetriebnahme steuern zu können. Daher kann jeder Funktionsbereich wieder von neuem beginnen, sobald eine Diagnoseabfrage beendet ist.

START/STOP MP — diese Befehle werden dazu benutzt, den Mikroprozessor ein- und auszuschalten. Der Mikroprozessor muß ausgeschaltet werden, bevor die Register des Mikroprozessors abgetastet werden. Der Stop-Befehl kann jederzeit ausgegeben werden, weil die Schnittstellensteuerschaltung den Befehl mit den Taktsignalen des Mikroprozessors synchronisiert.

LESE SIB/ST CPU ZK — dieser Befehl wird durch den Dienstprozessor benutzt, um Information von dem Mikroprozessor wieder aufzufinden. Dieser Befehl bewirkt, daß der Inhalt des Schnittstellen-Pufferregisters SIB in das Schnittstellenregister SI geladen wird. Der Dienstprozessor ist dann frei, den Inhalt des Schnittstellenregisters in den Dienstprozessor zurück zu übertragen. Dieser Befehl kann auch dazu benutzt werden, die Kippschaltung für die CPU-Anforderung zurückzustellen.

SP AUSN — dieser Befehl wird dazu benutzt, die normale Betriebsweise des Mikroprozessors zu unterbrechen und ihn zu veranlassen, auf eine Botschaft vom Dienstprozessor zu antworten. Wenn der Befehl decodiert ist, wird ein Bit (EX) in das Ausnahmeregister des Mikroprozessors gesetzt. Dieses Register wird periodisch vom Mikroprogramm abgefragt, um festzustellen, ob irgendeine Ausnahmebedingung besteht, die behandelt werden muß.

SP UBR — dieser Befehl wird ebenfalls dazu gebraucht, die normale Betriebsweise des Mikroprozessors zu unerbrechen und ihn zu veranlassen, dem Dienstprozessor zu antworten. In diesem Falle wird jedoch der Mikroprozessor unmittelbar unterbrochen und nicht erst darauf gewartet, ob der Mikroprozessor eine Unterbrechung annehmen will.

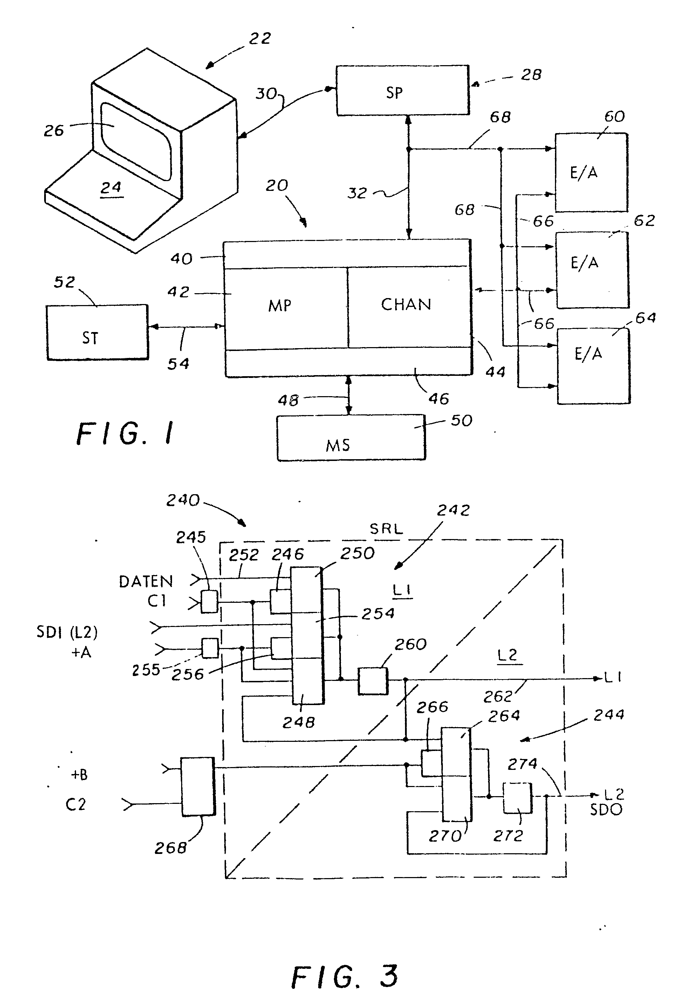

In der Fig. 1 ist dargestellt, wie die erfindungsgemäße Wartungsschnittstelleneinheit in eine datenverarbeitende Anlage eingebaut werden kann. Die Anlage enthält eine Zentraleinheit 20. Es ist weiter eine Benutzerendstelle 22 als Eingabe/Ausgabe-Gerät vorgesehen mit einem Tastenfeld 24 und mit einem Bildschirm 26. Zwischen der Benutzerendstelle 22 und der Zentraleinheit 20 ist ein Dienstprozessor 28 eingeschaltet. Der Dienstprozessor 28 enthält eine Steuereinrichtung für die Eingabe/Ausgabe-Geräte, Speichereinrichtungen und eine kleine eigene Zentraleinheit für die Steuerung der Benutzerendstelle 22. Der Dienstprozessor 28 ist über eine Sammelleitung 30 mit der Benutzerendstelle 22 verbunden und mit einer Sammelleitung 32 mit der Zentraleinheit 20.

Die zentrale Verarbeitungseinheit 20 enthält die Wartungsschnittstelleneinrichtung 40, welche den Gegenstand der Erfindung bildet. Die Einrichtung 40 stellt alle Hilfsfunktionen bereit, die für die Schnittstelle zwischen dem Dienstprozessor 28 und der Zentraleinheit 20 notwendig sind, um diese beiden Einrichtungen zu synchronisieren und um laufende Befehle zwischen dem Dienstprozessor 28 und der Zentraleinheit 20 zu interpretieren.

Außerdem stellt die Wartungsschnittstelleneinrichtung 40 andere Betriebsfunktionen bereit wie für das Ändern oder das Darstellen von Informationen oder für die Inbetriebnahme und das Unterbrechen der Arbeitsabläufe. Für Diagnosezwecke kann die Einrichtung Betriebsbereiche der Zentraleinheit abtrennen und Tests nach dem LSSD-Prinzip veranlassen. Die Zentraleinheit 20 enthält ferner einen Mikroprozessor 42, eine Eingabe/Ausgabe-Kanalsteuerung 44 und eine Hauptspeichersteuerung 46.

Über eine in beiden Richtungen benutzbare Sammelleitung 48 ist die Hauptspeichersteuerung 46 für das Speichern von Daten mit dem Hauptspeicher 50 verbunden, der ein Schreib/Lese-Speicher ist. Der Zugriff zum Hauptspeicher 50 erfolgt unter der Steuerung der Hauptspeichersteuerung 46, die in der Zentraleinheit 20 untergebracht ist.

Obwohl der Hauptspeicher 50 auch Instruktionen und Daten für den Mikroprozessor 42 enthalten könnte, sind diese Instruktionen in einem separaten Steuerspeicher 52 enthalten, der ebenfalls ein Schreib/Lese-Speicher ist und der über eine in beiden Richtungen benutzbare Sammelleitung 54 mit der Zentraleinheit 20 verbunden ist.

Die Eingabe/Ausgabe-Kanalsteuerung 44 enthält Register zum Zwischenspeichern von Daten, die zwischen der Zentraleinheit 20 und Eingabe/Ausgabe-Geräten 60, 62 und 64 übertragen werden. Diese sind üblicherweise Plattenspeicher, Magnetbandspeicher, Drucker, Kartenleser oder andere Einrichtungen. Über eine in beiden Richtungen benutzbare Sammelleitungen 66 sind die E/A-Geräte 60, 62 und 64 mit der Kanalsteuerung 44 und außerdem über eine Sammelleitung 68 mit dem Dienstprozessor 28 verbunden.

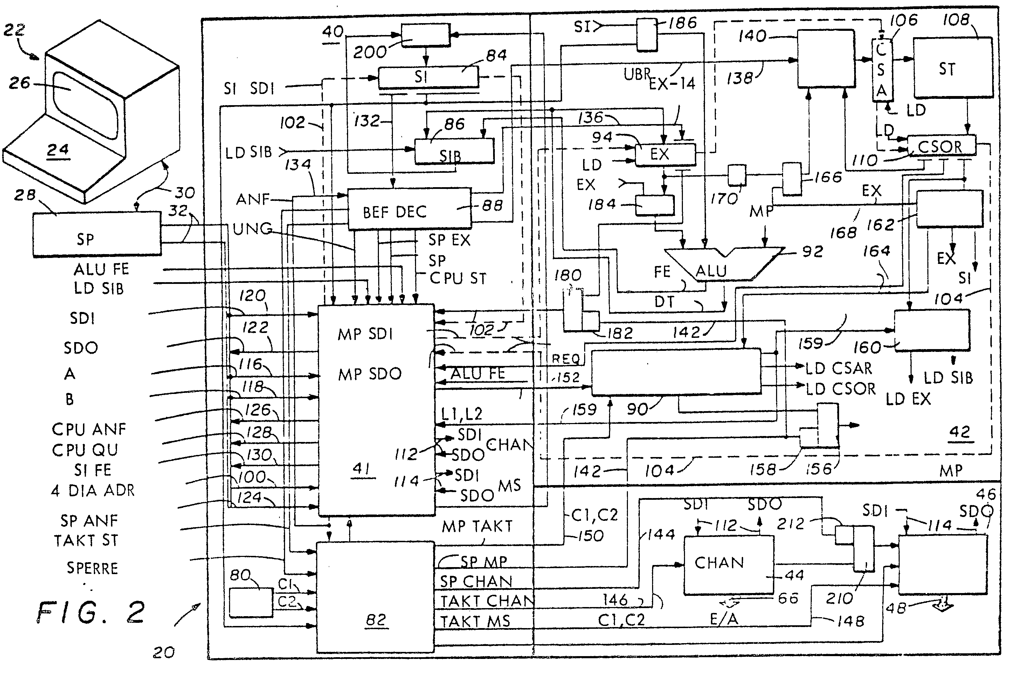

In der Fig. 2 ist die Zentraleinheit 20 schematisch als Blockschaltbild dargestellt. Wie erwähnt, enthält die Zentraleinheit 20 eine Wartungsschnittstelleneinrichtung 40, einen Mikroprozessor 42, eine Eingabe/Ausgabe-Kanalsteuerung 44 und eine Hauptspeichersteuerung 46. Die Wartungsschnittstelleneinrichtung 40 enthält einen Oszillator 80 zum Erzeugen der Taktsignale C1 und C2, die einer Zeitgebersteuerschaltung 82 zugeführt werden. Die Wartungsschnittstelleneinrichtung 40 enthält außerdem das Schnittstellenregister 84 und das Schnittstellen-Pufferregister 86, die Schnittstellensteuerschaltung 41 und die Befehlsdecodierschaltung 88. Der Mikroprozessor 42 enthält eine Zeitgeberschaltung 90, ein Rechenwerk 92 und ein Ausnahmeregister 94.

Die Hauptbestandteile der Zentraleinheit 20 werden nun kurz beschrieben. Die am hauptsächlichsten gebrauchte Einrichtung ist der Mikroprozessor 42 der Zentraleinheit 20, der in Verbindung mit einem Mikroprogramm dazu benutzt wird, Instruktionen oder Maschinenbefehle höherer Ordnung auszuführen. Das Rechenwerk 92 und das Ausnahmeregister 94 dienen zum Austausch von Daten mit der Wartungsschnittstelleneinrichtung 40. Das Ausnahmeregister 94 gehört zum Mikroprozessor 42 und sammelt Ausnahmebedingungen. Das Mikroprogramm fragt periodisch den Speicherinhalt des Ausnahmeregisters 94 ab, um zu bestimmen, ob irgendwelche Ausnahmebedingungen bestehen, die besonders behandelt werden müssen. Wenn solche Ausnahmen bestehen, wird der normale Arbeitsablauf unterbrochen, damit der Ausnahmezustand behoben werden kann. Die Schnittstellensteuerschaltung 41 hat die Möglichkeit, eine Bitposition des Ausnahmeregisters 94 zu setzen oder abzufragen, damit der normale Arbeitsablauf des Mikroprozessors 42 unterbrochen werden kann, um Bedienung zu erhalten.

Die Halbleiterplättchen, die den Mikroprozessor 42 aufbauen, sind als eine lange Ringschiebeschaltung entsprechend den LSSD-Prinzip aufgebaut. Der Zustand irgendeiner Kippschaltung im Mikroprozessor 42 kann geändert oder festgestellt werden durch Steuerung der Daten am Eingang oder durch Beobachten der Daten am Ausgang der Ringschiebeschaltung , während der Dateninhalt hindurch geschoben wird.

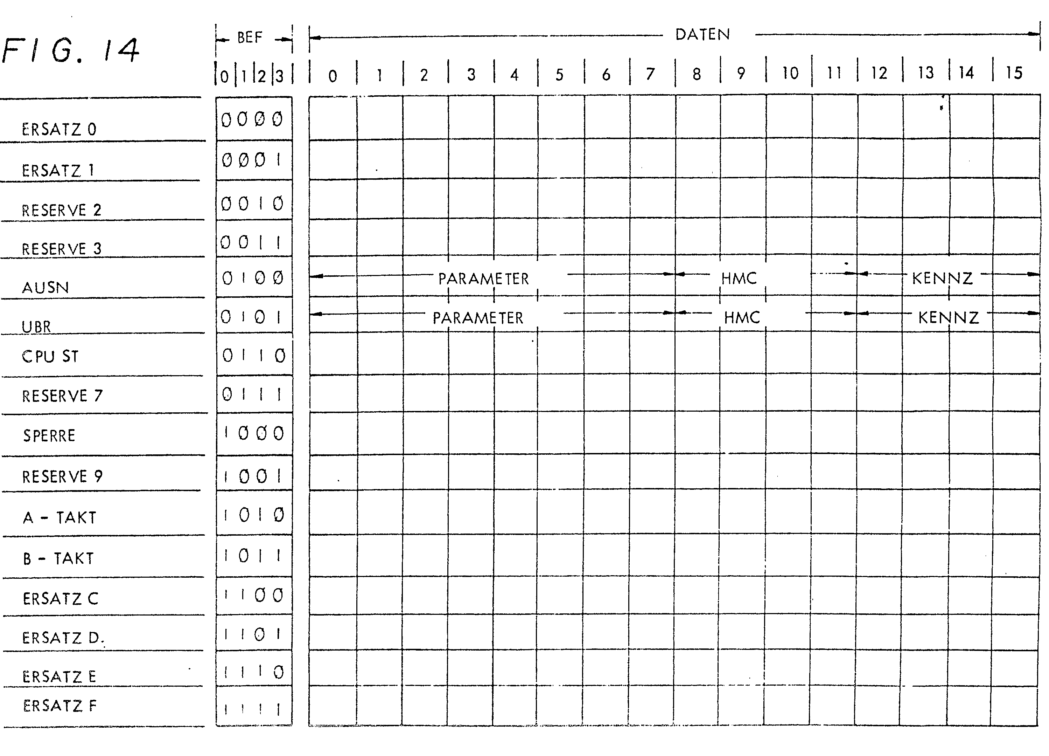

Das Schnittstellenregister 84 ist ein 20 Bit breites Register und wird hauptsächlich für die Übertragung von Daten zu und von der Wartungsschnittstelleneinrichtung 40 verwendet. Das SI-Register 84 ist ein LSSD-Schieberegister, das Befehle und Daten zwischen dem Dienstprozessor 28 und der Zentraleinheit 20 überträgt. Weil das Schnittstellenregister 84 ein unabhängiges Schieberegister ist, kann es durch den Dienstprozessor 28 zu jeder Zeit geladen werden, ohne die Arbeitsweise des Restes der Zentraleinheit 20 zu beeinträchtigen. Der Datenverkehr mit dem Dienstprozessor 28 ist seriell, die Weiterverarbeitung durch die Zentraleinheit 20 jedoch parallel, deshalb dient das Schnittstellenregister 84 (SI) auch als Serien/Parallel-Wandler. Vier Bits des Schnittstellenregisters 84 werden als Befehlsfeld benutzt und die übrigen sechzehn Bits werden für Daten benutzt. Die Befehle und das Bitformat werden später anhand von Fig. 14 beschrieben. Für das Mikroprogramm des Mikroprozessors 42 kann das Schnittstellenregister 84 als Datenquelle für das Rechenwerk angesehen werden. Es wird dabei gebraucht, Daten vom Dienstprozessor 28 an den Mikroprozessor 42 in die Zentraleinheit 20 zu übertragen.

Das Schnittstellen-Pufferregister 86 (SIB) ist ein sechzehn Bit breites Register, das gemeinsam mit dem SI-Register 84 verwendet wird, um Information vom Mikroprozessor 42 an den Dienstprozessor 28 zu übertragen. Information vom Dienstprozessor 28 an den Mikroprozessor 42 bildet die Eingangsdaten für das Schnittstellenregister 84 (SI). Vom Mikroprozessor 42 an den Dienstprozessor 28 übertragene Information bildet die Eingangsdaten für das Schnittstellen-Pufferregister 86 (SIB). Das Schnittstellen-Pufferregister 86 (SIB) dient als Zwischenspeicher für Daten vom Mikroprozessor 42, bis der Dienstprozessor 28 benachrichtigt ist, daß Daten für ihn verfügbar sind. Der Dienstprozessor 28 holt sich die Daten dadurch, daß er die Übertragung des Inhaltes des Schnittstellen-Pufferregisters 86 an das Schnittstellenregister 84 veranlaßt, die dann vom Schnittstellenregister 84 an den Dienstprozessor 28 zurück geschoben werden.

Die Befehlsdecodierschaltung 88 decodiert das Befehlsfeld des SI-Registers 84, nachdem es mit einem Maschinenbefehl vom Dienstprozessor 28 geladen wurde. Die Ausgabesignale der Befehlsdecodierschaltung 88 werden weitergeschaltet, um die angeforderte Operation auszuführen. Weil der Bitinhalt des Schnittstellenregisters 84 sich fortlaufend ändert, während das Register 84 seriell geladen wird, darf das Decodieren nicht vorher beginnen, bis die Schiebeoperation des Ladens beendet ist. Dies wird vom Dienstprozessor 28 durch Anheben des Signales »SP ANF« angezeigt, welches der Schnittstellensteuerschaltung 41 über die Sammelleitung 32 zugeführt wird. Die Zeitgebersteuerschaltung 82 enthält Kippschaltungen für die Freigabe von Taktsignale an die verschiedenen funktionellen Einheiten und Ringschiebeschaltungen der Zentraleinheit 20. Diese Kippschaltungen verhindern oder unterbrechen die Arbeitsabläufe in den entsprechenden Einheiten, wenn sie zurückgestellt sind. Der Schaltzustand der Kippschaltungen für die Taktfreigabe wird vom Dienstprozessor 28 über das Schnittstellenregister 84 gesteuert. Ebenfalls in der Zeitgebersteuerschaltung 82 befinden sich Kippschaltungen zum Abschalten oder Unterbrechen der Treibverstärker zum Steuern der Ausgabesignale von jedem funktionellen Bereich.

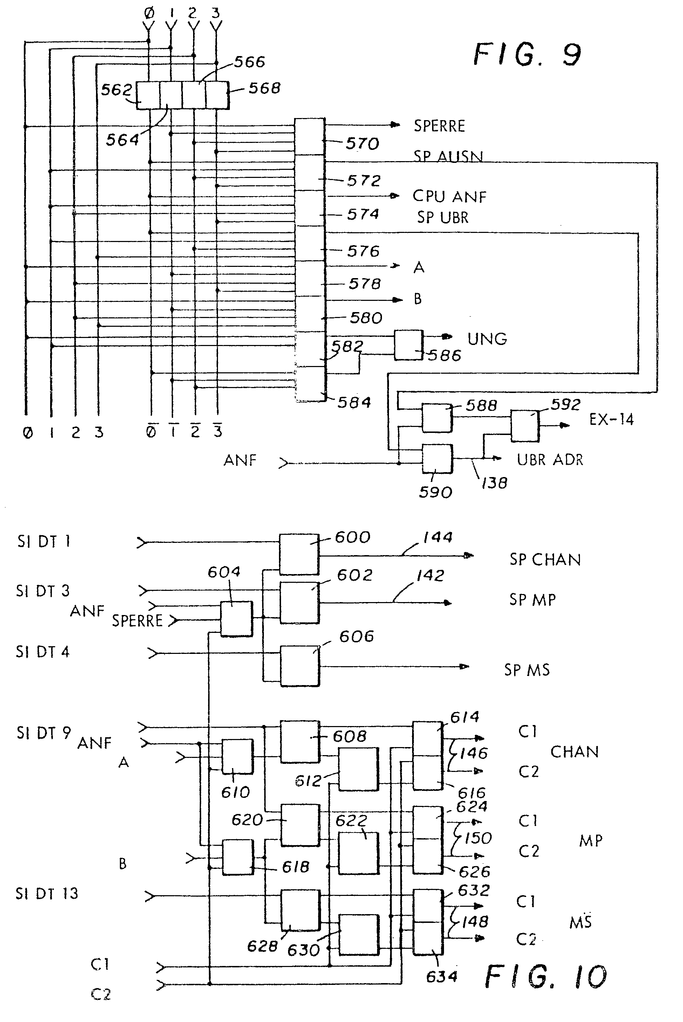

Schnittstellensignale an andere funktionelle Bereiche und Steuersignale für Register oder Speichereinrichtungen müssen unwirksam gemacht werden, wenn die Schiebeoperation nachdem LSSD-Prinzip stattfindet, damit fehlerhafte Operation anderer funktioneller Gebiete verhindert wird. Die Kippschaltungen für die Treibverstärker verhindern, wenn sie gesetzt sind, die Weitergabe von Schnittstellensignalen aus dem entsprechenden funktionellen Gebiet. Diese Kippschaltungen werden über das Schnittstellenregister 84 vom Dienstprozessor 28 gesetzt und zurückgestellt. Die Zeitgebersteuerschaltung 82 enthält ferner Schalteinrichtungen für die Verstärkung oder Wiederherstellung von Zeitgabesignalen vom Oszillator 80 an die verschiedenen funktionellen Einheiten der Zentraleinheit 20. Die Zeitgebersteuerschaltung 82 erhält Steuerbefehle von der Schnittstellensteuerschaltung 41 und steuert auch den laufenden oder gesperrten Zustand des Mikroprozessors 42. Einzelheiten der Zeitgebersteuerschaltung 82 werden im Zusammenhang mit der Fig. 10 beschrieben.

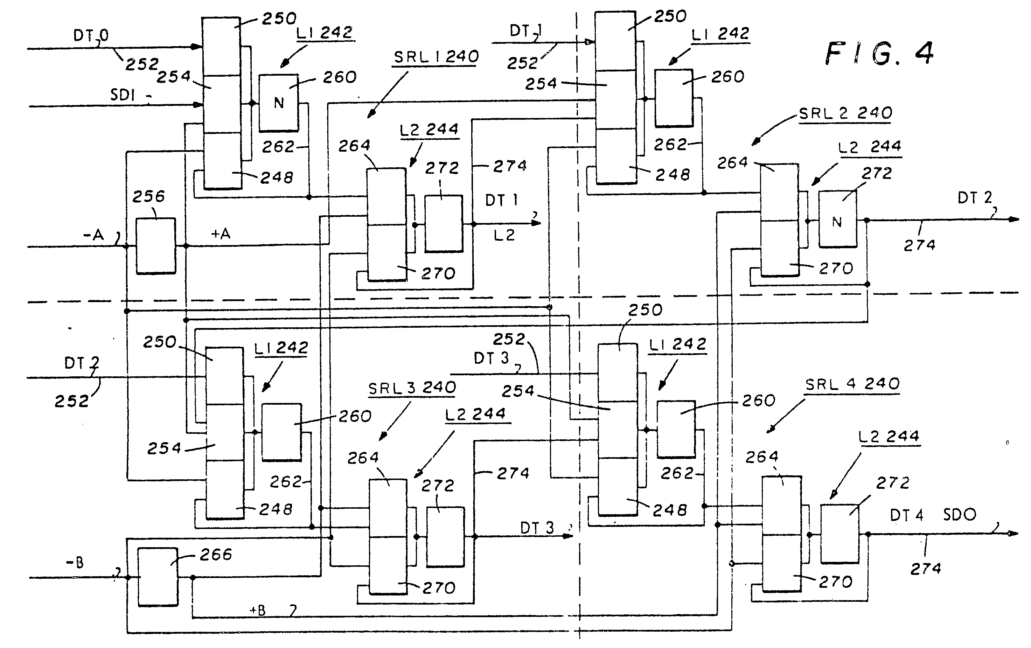

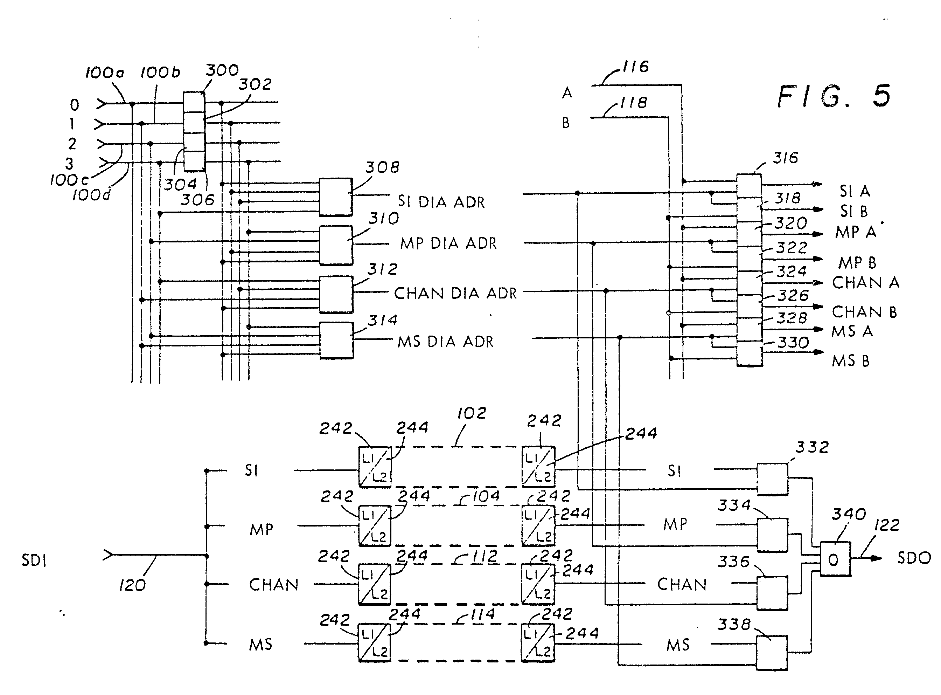

Aus der Fig. 2 ist zu ersehen, daß der Dienstprozessor 28 über die Sammelleitung 32 vier diagnostische Adressen über die Signalleitung 100 an die Schnittstellensteuerschaltung 41 geben kann. Diese vier diagnostischen Adressen werden von dem Dienstprozessor 28 dazu gebraucht, eine der Ringschiebeschaltungen der Zentraleinheit 20 auszuwählen. Wie später in Einzelheiten anhand der Fig. 5 beschrieben wird, besteht jede Ringschiebeschaltung aus mehreren Schieberegister-Kippschaltungen (SRL). Diese Kippschaltungen werden mit Bezug auf die Fig. 3 und 4 beschrieben. Sie geben die Möglichkeit, für Diagnosezwecke nach dem LSSD-Prinzip gebraucht zu werden. Die Wartungsschnittstelleneinrichtung enthält vier Ringschiebeschaltungen dieser Art. Die erste Ringschiebeschaltung enthält den SI-Testring, der in der Fig. 2 als gestrichelte Signalleitung 102 dargestellt ist. Auf der Eingabeseite des Schnittstellenregisters 84 ist diese die Dateneingabeleitung (SDI). Auf der Ausgabeseite ist es die Datenausgabeleitung (SDO). Eine zweite Ringschiebeschaltung ist der MP-Testring 104 für den Mikroprozessor, der in der Fig. 2 als gestrichelte Signalleitung 104 dargestellt ist. Die Schnittstellensteuerschaltung 41 gibt Daten an den Mikroprozessorschiebering 104 aus. Die Ringschiebeschaltung 104 gibt Eingangsdaten an das Ausnahmeregister 94, dessen Ausgangssignale an ein Steuerspeicher-Adressenregister 106 (CSAR) weitergegeben werden. Das Adressenregister 106 gibt Adressen an den Steuerspeicher 108, der Mikroinstruktionen für den Mikroprozessor 42 enthält. Die Ringschiebeschaltung 104 geht vom Ausgang des Steuerspeicher-Adressenregisters 106 zum Steuerspeicher-Ausgaberegister 110 (CSOR) weiter. Die Ausgangssignale des Ausgaberegisters 110 werden an die Schnittstellensteuerschaltung 41 als die seriell übertragenen Ausgabedaten des Mikroprozessors über den entsprechenden Teil der Ringschiebeschaltung 104 übertragen.

Die dritte Ringschiebeschaltung ist der Kanal-Testring 112. Die Schnittstellensteuerschaltung 41 gibt die Daten an die Eingabe/Ausgabe-Kanalsteuerung 44, deren Ausgangssignale an die Schnittstellensteuerschaltung 41 gegeben werden. Die vierte Ringschiebeschaltung ist der Hauptspeicher-Testring 114. Die Schnittstellensteuerschaltung 41 gibt die Daten seriell in die Hauptspeichersteuerung 46 und die Ringschiebeschaltung kommt zur Schnittstellensteuerschaltung 41 zurück über die Datenausgabeleitung der Ringschiebeschaltung 114. Diese vier Ringschiebeschaltungen werden später als Schnittstellenregister-Schiebering 102, Mikroprozessor-Schiebering 104, Kanal-Schiebering 112 und Hauptspeicher-Schiebering 114 bezeichnet.

Die über die Signalleitung 100 an die Schnittstellensteuerschaltung 41 gegebenen vier diagnostischen Adressen dort decodiert und dazu verwendet, die vom Dienstprozessor 28 über die Sammelleitung 32 gelieferten Zeitgebersignale A-Takt und B-Takt über Signalleitungen 116 und 118 an die Schnittstellensteuerschaltung 41 freizugeben. Die Zeitgebersignale A-Takt und B-Takt werden an die Ringschiebeschaltungen 102, 104, 112 und 114 gegeben, um vom Dienstprozessor 28 über die Sammelleitung 32 gesandte Daten über die Signalleitung 120 (SDI) weiter zu schalten. Sie werden zur ersten SRL-Kippschaltung einer Ringschiebeschaltung gegeben, durch diese Ringschiebeschaltung weitergeschoben und von der letzten SRL-Kippschaltung auf die Signalleitung 122 (SDO) von der Schnittstellensteuerschaltung 41 gegeben, welche Daten über die Sammelleitung 32 an den Dienstprozessor 28 gelangen.

Die vier Ringschiebeschaltungen der Wartungsschnittstelleneinrichtung erlauben die Durchführung verschiedener Arbeitsabläufe in der Zentraleinheit 20. Der Schnittstellenregister-Schiebering 102 erlaubt den selbständigen Datenverkehr zwischen dem Dienstprozessor 28 und der Wartungsschnittstelleneinrichtung 40 zur gleichen Zeit, wie andere Operationen in der Zentraleinheit 20 ablaufen. Der Schnittstellenregister-Schiebering 102 kann seriell ein Bitmuster in das Schnittstellenregister 84 eingeben, was mit der Arbeitsgeschwindigkeit des Dienstprozessors 28 völlig asynchron und unabhängig von den Arbeitsabläufen des Mikroprozessors 42 erfolgt.

Über die Sammelleitung 32 gibt der Dienstprozessor 28 auch das Signal »SP ANF« über die Signalleitung 124 an die Schnittstellensteuerschaltung 41. Nachdem ein Befehl in das Schnittstellenregister 84 eingeschoben wurde, schaltet der Dienstprozessor 28 über die Signalleitung 124 das Signal »SP ANF« ein, um anzuzeigen, daß der Befehl decodiert und ausgeführt werden soll. Danach wird das Signal »SP ANF« abgeschaltet.

Über die Signalleitung 128 wird das Quittungssignal »SP QU« von der Schnittstellensteuerschaltung 41 an den Dienstprozessor 28 gegeben. Das Quittungssignal wird vom Dienstprozessor 28 als Antwort auf das Anforderungssignal gegeben. Nach der Bedienung hat der Dienstprozessor 28 einen Befehl in das Schnittstellenregister 84 gesetzt und das Anforderungssignal eingeschaltet; die Wartungsschnittstelleneinrichtung 40 decodiert den Befehl und schaltet das Quittungssignal für den Dienstprozessor 28 ein, falls der Befehl gültig ist. Die Schnittstellensteuerschaltung 41 kann auch das Signal »SI UNG« über die Signalleitung 130 erzeugen, wenn der Inhalt des Registers als ungültig anzusehen ist.

Die Schnittstellensteuerschaltung 41 erhält von dem Mikroprozessor 42 auch Signale »CPU UNG« oder »ST CPU ANF«. Wenn eines dieser Signale eingeschaltet ist, dann gibt die Schnittstellensteuerschaltung das Signal »CPU ANF« aus, wie im Zusammenhang mit der Fig. 8 beschrieben wird.

Die Befehlsdecodierschaltung 88 (vgl. Fig. 9) erhält das Befehlsfeld des Schnittstellenregisters 84 über eine Signalleitung 132 und ein weiteres Anforderungssignal zum Durchschalten von der Schnittstellensteuerschaltung 41 über die Signalleitung 134. Die Befehlsdecodierschaltung 88 erzeugt ein Ungültigkeitssignal, ein Ausnahmebefehlssignal für den Dienstprozessor, ein Unterbrechungssignal oder ein Steuersignal für die Zentraleinheit, die alle an die Zeitgebersteuerschaltung 82 weitergegeben werden. Die Befehlsdecodierschaltung 88 erzeugt auch ein Signal, das Bit 14 zu setzen, welches über eine Signalleitung 136 an das Ausnahmeregister 94 gesendet wird. Auch kann ein weiteres Unterbrechungssignal ausgegeben werden, das über die Signalleitung 138 an die Schaltkreise 140 zum Erzeugen der nächsten Adresse ausgegeben wird.

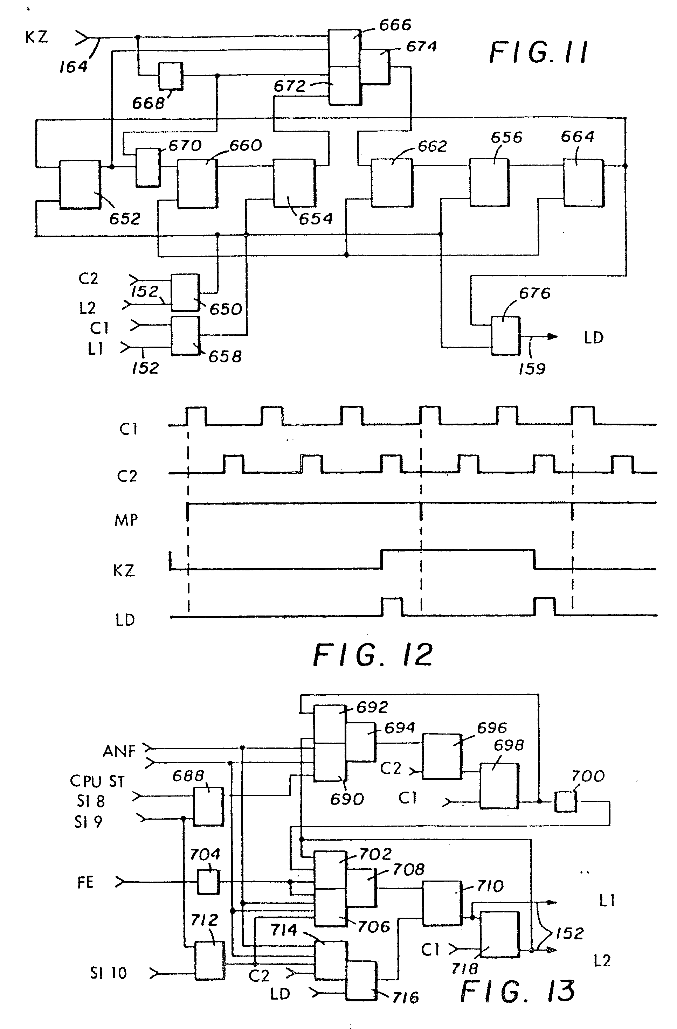

Die Zeitgebersteuerschaltung 82 erhält von dem Oszillator 80 die Zeitgebersignale C1 und C2, wie im Zusammenhang mit der Fig. 11 erläutert wird. Die Schaltung erzeugt auch Signale, um gegebenenfalls den Mikroprozessor 42, die Hauptspeichersteuerung 46 oder die Kanalsteuerung 44 zeitweilig außer Betrieb zu setzen. Auch erzeugt die Schaltung Taktsignale, welche über die Signalleitung 146 an die Eingabe/Ausgabe-Kanalsteuerung 44 gesendet werden, und die Taktsignale C1 und C2 für den Hauptspeicher über die Signalleitung 148 an die Hauptspeichersteuerung 46. Weiterhin erzeugt die Zeitgebersteuerschaltung 82 die Taktsignale für den Mikroprozessor, welche als C1 und C2 über die Signalleitungen 150 an die Zeitgeberschaltung 90 für den Mikroprozessor gegeben werden.

Die Zeitgeberschaltung 90 erhält auch Einschaltsignale L1 und L2 von der Schnittstellensteuerschaltung 41 über die Signalleitung 152. Die Zeitgeberschaltung 90 erzeugt die Ladesignale für das Adressenregister 106 und das Ausgaberegister 110 des Steuerspeichers. Weiter erzeugt die Schaltung ein Signal, das an das UND-Glied 156 gegeben wird, um ein Steuersignal zum Einschreiben in den Speicher zu erzeugen. Das über die Signalleitung 142 zugeführte Unterbrechungssignal für die Treiberschaltungen wird einem Inverter 158 zugeführt, um die Erzeugung eines Schreibsignales durch das UND-Glied zu verhindern.

Die Zeitgeberschaltung 90 des Mikroprozessors liefert über die Signalleitung 159 auch ein Signal an die Schnittstellensteuerschaltung 41 und an eine Decodierschaltung 160 für die Bestimmungsadresse, wobei die Decodierschaltung auch ein Ausgangssignal von dem Steuerspeicher-Ausgaberegister 110 erhält. Die Bestimmungsadressen-Decodierschaltung 160 erzeugt auch Ladesignale für das Ausnahmeregister und das Schnittstellen-Pufferregister. Das Ausgaberegister 110 des Steuerspeichers liefert auch ein Ausgangssignal an einen Quellendecodierschaltkreis 162, welcher Signale für das Ausnahmeregister und für das Schnittstellenregister erzeugt. Der Quellendecodierkreis 162 gibt über die Signalleitung 164 an die Zeitgeberschaltung 90 des Mikroprozessors ein Signal aus, das anzeigt, ob ein Arbeitszyklus abzukürzen ist. Die Quellendecodierschaltung 162 gibt auch ein Ausgangssignal an das UND-Glied 166 über eine Signalleitung 168 aus, ob das Ausnahmeregister abzufragen ist. Das UND-Glied 166 erhält auch ein Eingangssignal von dem Ausnahmeregister 94 über ein ODER-Glied 170, um ein Ausgangssignal an die Schaltung 140 für die Bestimmung der nächsten Adresse auszugeben.

Das Ausnahmeregister 94 gibt Information über die Bitposition 14 an ein UND-Glied 180 für die Weitergabe an die Schnittstellensteuerschaltung 41. Diese Information wird durch einen Inverter 182 blockiert, falls er über eine Signalleitung 142 ein Signal erhält, daß die Treiberschaltungen des Mikroprozessors außer Betrieb zu setzen sind. Die Information vom Ausnahmeregister 94 wird an ein UND-Glied 184 gegeben, welches auch das Signal »EX« erhält, das durch den Quellendecodierkreis 162 erzeugt wird, um das Rechenwerk 92 vorzubereiten. Vom Schnittstellenregister 84 werden Daten in das Rechenwerk 92 übertragen, welches ein Signal an ein UND-Glied 186 gibt, das auch ein Signal erhält, das durch den Quellendecodierkreis 162 erzeugt wurde und auf das Schnittstellenregister hinweist. Auch erhält das Rechenwerk 92 Eingangssignale von allgemeinen Registern des Mikroprozessors und erzeugt ein Fehlersignal, das dem Schnittstellen-Pufferregister 86 zugeführt wird. Datensignale vom Rechenwerk werden dem Schnittstellen-Pufferregister 86 und dem Ausnahmeregister 94 zugeführt.

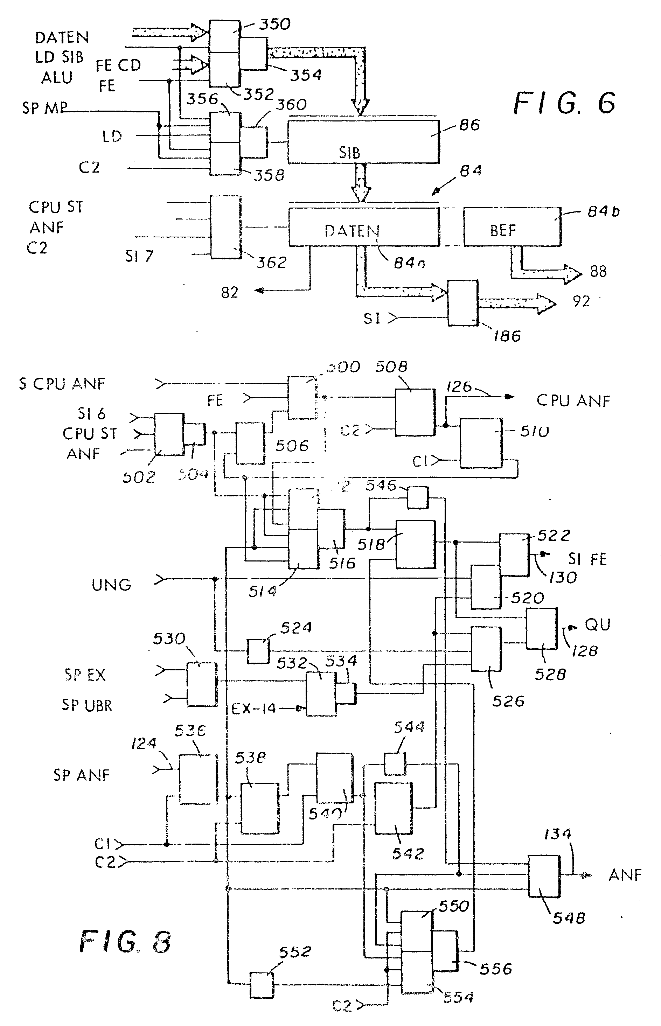

Wie genauer im Zusammenhang mit der Fig. 6 beschrieben wird, erzeugt die Schnittstellensteuerschaltung 41 auch ein Lesesignal für das Pufferregister, das einem UND-Glied 200 zugeführt wird, welches auch ein Ausgabesignal vom Schnittstellen-Pufferregister 86 erhält, um Daten vom Schnittstellenregister 84 zu übertragen.

Die Kanalsteuerung 44 erzeugt ein Anforderungssignal, das an ein UND-Glied 210 gesendet wird, dessen Ausgang an die Hautspeichersteuerung 46 geht. Das Anforderungssignal wird blockiert im Falle daß ein von der Zeitgebersteuerschaltung 82 erzeugtes Blockiersignal besteht, das über eine Signalleitung 144 an einen Inverter 212 gegeben wird, dessen Ausgangssignal zum UND-Glied 210 geführt wird.

Ein wesentlicher Gesichtspunkt der Erfindung ist die Funktion der Wartungsschnittstelleneinrichtung 40, ein Bindeglied zwischen dem Dienstprozessor 28 und der zentralen Verarbeitungseinheit 20 zu bilden, daß den Datenverkehr zwischen diesen beiden asynchronen Einrichtungen überwacht und steuert. Der Dienstprozessor 28 arbeitet asynchron und ist wesentlich langsamer als die Zentraleinheit 20. Aus diesem Grunde muß die Wartungsschnittstelleneinrichtung 40 gewährleisten, daß der Datenverkehr zuverlässig erfolgt und keine Konkurrenzsituationen auftreten können. Wenn der Dienstprozessor 28 den Beginn einer Datenübertragung wünscht, schiebt er seriell ein 20 Bit breites Wort in das Schnittstellenregister 84. Die Schiebeoperation wird dadurch bewirkt, daß der Dienstprozessor 28 über die Signalleitung 100 für die vier diagnostischen Adressen die Adresse des Schnittstellenregister-Schieberings 102 gibt und abwechselnd die Zeitgebersignale A-Takt und B-Takt über die Signalleitungen 116 und 118 an die Schnittstellensteuerschaltung 41 zwanzig Mal hintereinander gibt und dabei gleichzeitig den Befehl »SDI« über die Signalleitung 120 an die Schnittstellensteuerschaltung 41 gibt. Wenn die Schiebeoperation beendet ist, schaltet der Dienstprozessor 28 das Signal »SP ANF« über die Signalleitung 124 an die Schnittstellensteuerschaltung 41 ein. Der Dienstprozessor 28 kann solange nichts weiter unternehmen, bis er ein Quittungssignal über die Signalleitung 128 oder ein Ungültigkeitssignal über die Signalleitung 130 von der Schnittstellensteuerschaltung 41 erhält. Wenn die Wartungsschnittstelleneinrichtung 40 das Anforderungssignal »SP ANF« erhält, decodiert sie den Befehl im Schnittstellenregister 84. Der im Befehlsfeld des Registers vorhandene Befehl kann ungültig sein, gültig, jedoch unausführbar zu dieser Zeit aus irgendwelchen Umständen sein, gültig und sofort durch die Einrichtung 40 ausführbar sein, oder aber er kann gültig sein, jedoch eine Interpretation durch den Mikroprozessor 42 erfordern. Je nach der Situation wird eine von verschiedenen Operationen durch die Wartungsschnittstelleneinrichtung ausgeführt.

Wenn der Befehl ungültig oder nicht definiert ist, wird sofort das Ungültigkeitssignal »SI UNG« eingeschaltet und bleibt eingeschaltet, bis der Dienstprozessor 28 das Anforderungssignal »SP ANF« abschaltet, woraufhin die Zentraleinheit 20 das Ungültigkeitssignal »SI UNG« abschaltet. Nachdem der Dienstprozessor 28 das erkannt hat, ist er frei, das Schnittstellenregister 84 mit einem neuen Befehl zu laden und das Anforderungssignal »SP ANF« erneut zu senden. Die gegenseitige Verriegelung der Anforderungs- und Ungültigkeitssignale verhindert, daß neue Befehle ausgegeben werden, bevor der letzte Befehl ausgeführt ist.

Auf diese Weise werden auch Unterschiede in der Arbeitsgeschwindigkeit von Dienstprozessor 28 und Mikroprozessor 42 ausgeglichen.

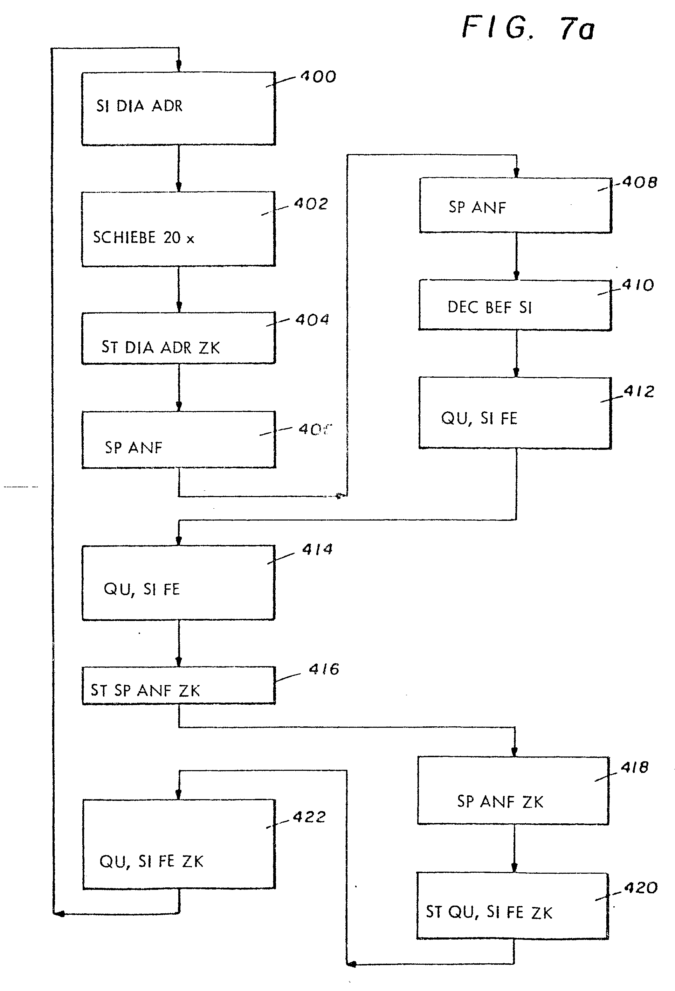

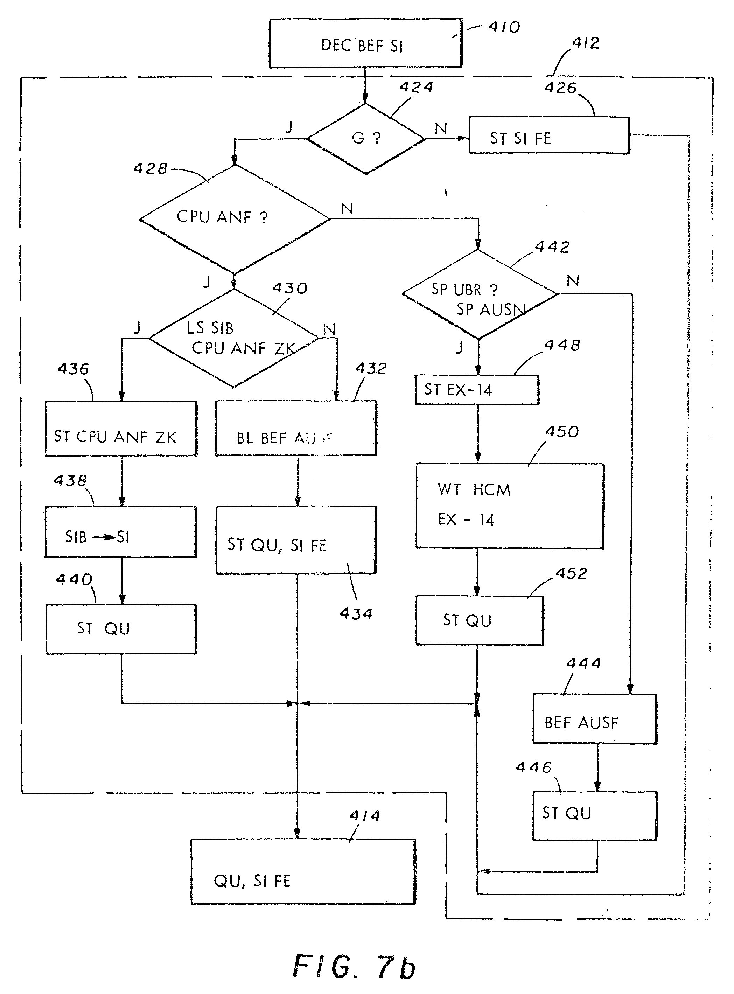

Wenn der Befehl gültig, aber aus anderen Gründen unausführbar ist, sendet die Zentraleinheit 20 ein Quittungssignal und ein Ungültigkeitssignal. Dadurch wird dem Dienstprozessor 28 angezeigt, daß eine bestimmte Befehlsfolge zu durchlaufen ist, die später anhand der Fig. 7a und 7b erklärt wird, bevor der gerade gegebene Befehl von neuem gegeben werden kann.

Wenn der Befehl gültig und ausführbar ist, wird das Quittungssignal sofort gesendet und der Befehl ausgeführt. Wenn der Dienstprozessor 28 das Quittungssignal erkennt, schaltet er das Anforderungssignal ab und wenn die Zentraleinheit 20 die Abschaltung des Anforderungssignales erkennt, schaltet sie ihrerseits das Quittungssignal aus. Wenn der Dienstprozessor 28 erkennt, daß das Quittungssignal ausgeschaltet ist, kann er eine neue Folge für eine andere Instruktion beginnen.

Wenn der Befehl gültig ist, jedoch eine Interpretation durch den Mikroprozessor 42 erfordert, dann wird das Quittungssignal nicht sofort gesendet. Der Befehl setzt das EX-Bit 14 von der Befehlsdecodierschaltung 88 über die Signalleitung 136 in das Ausnahmeregister 94. Das Quittungssignal wird jedoch nicht gegeben, bis das Mikroprogramm des Mikroprozessors 42 die Ausnahmebedingung erkennt und ein entsprechendes Signal erzeugt und an das UND-Glied 166 gibt. Er liest den Inhalt des Schnittstellenregisters 84 und stellt das Bit 14 im Ausnahmeregister 94 zurück. Diese Folge meldet dem Dienstprozessor 28, daß das Mikroprogramm des Mikroprozessors 42 den Inhalt des Schnittstellenregister 84 gelesen hat und der Dienstprozessor 28 das Anforderungssignal zurückstellen kann. Nachdem das Quittungssignal ausgeschaltet ist, kann die Befehlsfolge wiederholt werden. Der Dienstprozessor 28 und die Wartungsschnittstelleneinrichtung 40 bilden auch einen Übermittlungsweg zwischen der Bedienungsperson der Benutzerendstelle 22 und der Zentraleinheit 20. Es können Befehle eingegeben werden wie Start, Stop, Ändere oder Stelle gewisse Betriebsabläufe dar. Jedoch, Änderungen im Betriebszustand der Zentraleinheit 20, die asynchron auftreten, müssen auch der Bedienungsperson angezeigt werden. Zum Beispiel müssen Ungültigkeitsbedingungen, welche den Mikroprozessor 42 veranlassen zu stoppen, an den Dienstprozessor 28 weitergegeben und in der Benutzerendstelle 22 angezeigt werden. Obwohl der größte Teil solcher Botschaften im Dienstprozessor 28 seinen Ursprung hat, sind doch die Botschaften, welche die Zentraleinheit 20 an den Dienstprozessor 28 gibt, von höherer Priorität als solche vom Dienstprozessor 28 an die Zentraleinheit 20. Wenn eine Ungültigkeitsbedingung den Mikroprozessor 42 veranlaßt hat zu stoppen, dann ist er nicht fähig, auf gewisse Anforderungen von der Benutzereinheit 22 zu reagieren, bis die Situation geklärt ist oder an die Bedienungsperson der Benutzerendstelle 22 berichtet.

Das Schnittstellen-Pufferregister 86, das Anforderungssignal der Zentraleinheit auf der Leitung 126 »CPU ANF« und Lesebefehle für das Pufferregister werden benutzt, um einen zweiseitigen Datenverkehr ohne Konkurrenzsituation oder den Verlust von Daten zu ermöglichen. Weil beide Einrichtungen, der Dienstprozessor 28 und der Mikroprozessor 42 asynchron arbeiten, ist es möglich, daß jeder von ihnen einen Datenverkehr eröffnen will, so daß sie es beide gleichzeitig versuchen. Der Dienstprozessor 28 hat die Kontrolle über das Schnittstellenregister 84, und weil dieses Register 84 sich in einem unabhängigen Schiebering 102 befindet, der von den anderen drei Schieberingen 104, 112 und 114 unabhängig ist, kann es zu jeder Zeit mit einem neuen Befehl geladen werden. Das Mikroprogramm des Mikroprozessors 42 hat die Kontrolle über das Schnittstellen-Pufferregister 86 und kann daher das Register 86 zu jeder Zeit laden. Der Dienstprozessor wird einen Datenverkehr beginnen, wenn er die Befehle von der Benutzerendstelle 22 erhält. Wenn jedoch ein Fehler im Mikroprozessor 22 auftrat wird ein entsprechendes Ungültigkeitssignal in das Schnittstellen-Pufferregister 86 gegeben. Das erfolgt durch ein Ungültigkeitssignal vom Rechenwerk 92, woraufhin ein Anforderungssignal der Zentraleinheit erzeugt wird. Botschaften, die von der Zentraleinheit 20 ausgehen, haben Priorität über Befehle vom Dienstprozessor 28. Wenn daher das Schnittstellen-Pufferregister 86 geladen wird, dann wird auch ein Anforderungssignal der Zentraleinheit erzeugt. Der einzige Befehl, den in dieser Situation die Schnittstellensteuerschaltung 41 annimmt, ist ein Steuerbefehl der Zentraleinheit, den Inhalt des Pufferregisters 86 zu lesen und das Anforderungssignal der Zentraleinheit zurückzustellen. Alle anderen Befehle an den Dienstprozessor 28 werden zurückgewiesen. Diese gegenseitige Verriegelung bewirkt, daß ein neuer Befehl vom Dienstprozessor 28 daran gehindert wird, einen Ablauf in der Zentraleinheit 20 zu initiieren, welcher den Speicherinhalt des Schnittstellen-Pufferregister 86 zerstören würde, bevor er an den Dienstprozessor 28 übertragen worden wäre. Wenn der Dienstprozessor 28 das Anforderungssignal der Zentraleinheit erkennt, gibt er einen Befehl, das Pufferregister auszulesen, um den Status der Zentraleinheit 20 zu bestimmen. Wenn der Dienstprozessor 28 einen neuen Befehl in das Schnittstellenregister 84 gerade dann lädt, wenn auch das Schnittstellen-Pufferregister 86 geladen wird, dann wird der im Register 84 stehende Befehl zurückgewiesen. Aber kein Befehl geht verloren und keine Konkurrenzsituation zwischen dem Dienstprozessor 28 und dem Mikroprozessor 42 kann auftreten. Der Dienstprozessor 28 liest das Schnittstellen-Pufferregister 86 und entscheidet, den zurückgewiesenen Befehl von neuem auszugeben oder eine andere Aktion zu unternehmen, die durch den Inhalt des Schnittstellen-Pufferregister 86 begündet ist.

Ein wesentlicher Gesichtspunkt der vorliegenden Erfindung ist die Fähigkeit des Dienstprozessors 28, mit den Mikroprogrammen der Zentraleinheit zu verkehren.

Ein Datenverkehr vom Dienstprozessor 28 an die Zentraleinheit 20 wird durch den Dienstprozessor 28 dadurch begonnen, daß er seriell eine Botschaft in das Datenfeld des Schnittstellenregisters 24 über den Schnittstellenregister-Schiebering 102 gibt und das Ausnahmesignal »SP AUSN« in das Befehlsfeld des Schnittstellenregisters 84 gibt. Wenn durch den Dienstprozessor 28 das Anforderungssignal gesendet wird, dann decodiert die Wartungsschnittstelleneinrichtung 40 das Befehlsfeld des Schnittstellenregisters 84 durch die Arbeitsabläufe in der Befehlsdecodierschaltung 88 und setzt das Bit 14 in das Ausnahmeregister 94 durch ein Signal, welches durch die Decodierschaltung 88 erzeugt und über die Signalleitung 136 ausgegeben wurde. Wenn das Mikroprogramm des Mikroprozessors 42 die Ausnahmebedingung erkennt, verzweigt es zu einer Unterroutine. Der Mikroprozessor 42 liest das Datenfeld des Schnittstellenregisters 84, indem er dieses Register 84 als Quellenregister für das Rechenwerk 92 wählt. Diese Wahl erfolgt dadurch, daß die Daten des Registers an das UND-Glied 186 gleichzeitig mit einem Signal gegeben werden, das durch den Quellendecodierkreis 162 erzeugt wurde und an das UND-Glied 186 gegeben, um die Daten des Schnittstellenregisters in das Rechenwerk 92 durchzuschalten.

Die Botschaft im Schnittstellenregister 84 kann auf verschiedene Weise interpretiert werden. Sie kann beispielsweise als Befehl behandelt werden, den Inhalt bestimmter Speicherstellen des Hauptspeichers 50 auf dem Bildschirm darzustellen. Die Adresse der darzustellenden Speicherstelle würde dann in einem späteren Datenaustausch übertragen werden. Wenn das Mikroprogramm den Inhalt des Schnittstellenregisters 84 gelesen hat, stellt es das Bit 14 des Ausnahmeregisters 94 zurück. Daraufhin wird ein Quittungssignal erzeugt, daß seinerseits den Dienstprozessor 28 veranlaßt, das Anforderungssignal abzuschalten. Daraufhin schaltet auch die Zentraleinheit 20 das Anforderungssignal ab. Dann kann der Dienstprozessor 28 eine neue Botschaft in das Datenfeld des Schnittstellenregisters 84 laden und das Signal für eine Ausnahmebedingung in das Befehlsfeld des Registers 84 setzen und das Anforderungssignal für den Dienstprozessor senden. Auch in diesem Falle erkennt die Zentraleinheit 20 die Ausnahmebedingung und verzweigt entsprechend. In diesem Falle mag sie den Inhalt des Schnittstellenregisters 84 oder einen Teil davon als Adresse für die Bildschirmdarstellung behandeln. Auf diese Weise kann jede beliebige Datenmenge vom Dienstprozessor 28 an den Mikroprozessor 42 übertragen werden. Weil die Zentraleinheit 20 wesentlich schneller arbeitet als der Dienstprozessor 28, mag die Zentraleinheit 20 nebenher normale Arbeitsabläufe ausführen, während der Dienstprozessor 28 die nächsten zu übertragenden Daten in das Schnittstellenregister 84 lädt. Der Dienstprozessor 28 wird nicht versuchen, neue Daten in das Schnittstellenregister 84 zu laden, bevor nicht die Zentraleinheit 20 auf die erste Botschaft geantwortet hat dadurch, daß sie das Bit 14 des Ausnahmeregisters 94 zurückgestellt.

Datenverkehr vom Mikroprozessor 42 zum Dienstprozessor 28 kann ebenfalls durch Benutzung der Wartungsschnittstelleneinrichtung nach der Erfindung erfolgen. Der Mikroprozessor 42 kann Datenübertragungen beginnen, um fehlerhafte Zustände an die Bedienungsperson der Benutzerendstelle 22 zu melden oder um auf eine Anforderung zu antworten. Beispielsweise können angeforderte Speicherstellen des Hauptspeichers 50 auf dem Bildschirm dargestellt werden. Im ersten Falle lädt das Mikroprogramm seine Daten in das Schnittstellen-Pufferregister 86 über die Datensammelleitung vom Rechenwerk und sendet ein entsprechendes Anforderungssignal der Zentraleinheit. Wenn das Signal »CPU ANF« eingeschaltet ist, dann führt die Schnittstellensteuerschaltung 41 keinen Befehl vom Dienstprozessor 28 aus mit Ausnahme eines Steuerbefehls für die Zentraleinheit, um den Inhalt des Schnittstellen-Pufferregisters 86 auszulesen und das Anforderungssignal der Zentraleinheit zurückzustellen. Dieses Vorgehen verhindert, daß die von der Zentraleinheit 20 kommenden Daten verlorengehen, weil die Zentraleinheit 20 nicht mit der Ausführung eines anderen Befehls vom Dienstprozessor beginnen wird. Weil die Schnittstellensteuerschaltung 41 alle Befehle zurückweist mit Ausnahme des Signals »LESE SIB/ST CPU ZK«, zwingt sie den Dienstprozessor 28 dazu, die Daten im Schnittstellen-Pufferregister 86 zu lesen, bevor ein neuer Befehl ausgeführt werden kann.

Im zweiten Falle, wenn das Mikroprogramm der Zentraleinheit Daten aufgrund einer Anforderung an den Dienstprozessor zurückgibt, setzt das Mikroprogramm der Zentraleinheit die Daten in das Schnittstellen-Pufferregister 86, bevor das EX-Bit 14 zurückgestellt wird, das anzeigt, das die Daten aufgrund der Ausnahmebedingung behandelt werden. So wird der Dienstprozessor 28 darauf aufmerksam gemacht, daß die angeforderten Daten im Schnittstellen-Pufferregister 86 zur Verfügung stehen, die dann durch die Ausgabe eines entsprechenden Befehls gelesen werden können und anschließend in das Schnittstellenregister 84 gesetzt werden.

Um den Wert der vorliegenden Erfindung besser beurteilen zu können, ist es nicht nur notwendig, die normale Arbeitsweise der Wartungsschnittstelleneinrichtung zu verstehen, sondern man muß auch die andere Betriebsweise beachten, die eine leichte Diagnose der Schaltung ermöglicht.

In der Fig. 3 ist ein sogenanntes SRL-Kippglied 240 dargestellt. Jedes SRL-Kippglied 240 in einer Ringschiebeschaltung besteht aus einem L1-Kippglied 242 und einem L2-Kippglied 244. Beide Teil-Kippglieder 242 oder 244 können funktionsmäßig gebraucht werden oder auch nicht, jedoch sind beide notwendig, um das Durchschieben von Daten längs einer Ringschiebeschaltung zu ermöglichen. Entweder die Daten des L1-Kippgliedes 242 oder die des L2-Kippgliedes 244 können wiedergewonnen werden, aber nicht beide gleichzeitig. Wenn die L1-Daten von Interesse sind, müssen die L2-Daten geopfert werden und umgekehrt. Beim seriellen Einlesen von Daten, kurz SDI genannt, werden zunächst beide Teil-Kippglieder auf den gleichen Wert bzw. in den gleichen Schaltzustand gesetzt.

Im normalen Arbeitsbetrieb, d. h. nicht in der diagnostischen Betriebsweise, wird ein SRL-Kippglied 240 durch die Taktsignale C1 und C2 des datenverarbeitenden Systems gesetzt und zurückgestellt. Das Taktsignal C1 wird auf einen Inverter 245 gegeben, dessen Ausgangssignal zu einem Inverter 246 und zu einem invertierenden UND-Glied oder NAND-Glied 248 geführt wird, die beide Teil des L1-Kippgliedes 242 des SRL-Kippgliedes 240 sind. Das Ausgangssignal des Inverters 246 wird zum NAND-Glied 250 gegeben, dessen anderer Eingang mit der Signalleitung 252 verbunden ist, welche ein Signal führt, das den nicht diagnostischen Betriebszustand kennzeichnet.

Das SDI-Signal von einem vorhergehenden L2-Kippglied 244 wird auf das NAND-Glied 254 gegeben. Das Zeitgebersignal A-Takt vom Dienstprozessor 28 (Fig. 2) wird auf einen Inverter 255 gegeben, dessen Ausgangssignal zum Inverter 256 und zum NAND-Glied 248 geht. Die Ausgangssignale der NAND-Glieder 250, 254 und 248 werden einem Inverter 260 zugeführt, der das Ausgangssignal des L1-Kippgliedes 242 erzeugt und über die Signalleitung 262 ausgibt. Das Ausgangssignal des Inverters 260 bildet auch ein Eingangssignal des NAND-Gliedes 248.

Im L2-Kippglied 244 des SRL-Kippgliedes 240 wird das Ausgangssignal des Inverters 260 auf einen Eingang des NAND-Gliedes 264 gegeben. Der andere Eingang des NAND-Gliedes 264 ist mit einem Inverter 266 verbunden, dessen Eingangssignal vom invertierenden ODER-Glied oder NOR-Glied 268 kommt. Die Eingangssignale des NOR-Gliedes 268 sind das Taktsignal C2, das von der Zeitgebersteuerschaltung 82 (Fig. 2) erzeugt wird und das Zeitgebersignal B-Takt vom Dienstprozessor 28. Das Ausgangssignal des NOR-Gliedes 268 bildet auch ein Eingangssignal des NAND-Gliedes 270. Die Ausgangssignale der NAND-Glieder 264 und 270 werden zu einem Inverter 272 geführt, welcher das L2-Signal erzeugt welches zur seriellen Ausgabe von Daten dient (SDO), und welches als Ausgangssignal des L2-Kippgliedes 244 des SRL-Kippgliedes 240 über die Signalleitung 274 ausgegeben wird. Das Ausgangssignal des Inverters 272 wird auch zurückgeführt und als Eingangssignal des NAND-Gliedes 270 verwendet.

Das SRL-Kippglied 240 besteht im wesentlichen aus zwei Kippgliedern, dem L1-Kippglied 242 und dem L2-Kippglied 244, welche direkt untereinander verbunden sind. Die Daten in beiden Teil-Kippgliedern sind identisch, nachdem die Taktsignale C1 und C2 nacheinander dem SRL-Kippglied 240 zugeführt wurden. Wenn jedoch das SRL-Kippglied 240 als Element oder als Bitposition in einer Ringschiebeschaltung arbeitet, werden die Taktsignale C1 und C2 nicht zugeführt. Viel mehr wird das Signal A-Takt gebraucht, um Daten in das L1-Kippglied 242 einzuschieben, und das Signal B-Takt wird gebraucht, um Daten vom L1-Kippglied 242 in das L2-Kippglied 244 des gleichen SRL-Kippgliedes 240 zu übertragen.

Im Betrieb wird das Taktsignal A gebraucht, um Daten in L1 zu übertragen und das Taktsignal B, um Daten in L2 der gewählten Ringschiebeschaltung zu übertragen. Die Auswahl erfolgt durch eine der vier diagnostischen Adressen vom Dienstprozessor 28. Während der Taktzeit A werden Daten auf der SDI-Signalleitung 120 in das erste L1-Kippglied der gewählten Ringschiebeschaltung 102, 104, 112 oder 114, geladen und alle L1-Kippglieder aller übrigen SRL-Kippglieder der gewählten Ringschiebeschaltung werden von dem L2-Kippglied der vorhergehenden Stufe geladen. Während der Taktzeit B werden alle L2-Kippglieder der SRL-Kippglieder der gewählten Ringschiebeschaltung von den L1-Kippgliedern der gleichen Schieberegisterstufe geladen. Um Daten seriell in eine Ringschiebeschaltung einzugeben, wird der gewünschte Schiebering mittels einer der vier diagnostischen Adressen vom Dienstprozessor 28 gewählt. Die für die letzte Schieberegisterstufe bestimmten Daten werden als erste auf die SDI-Signalleitung 120 gegeben, dann werden abwechselnd und nacheinander die Taktsignale A und B ausgegeben. Für jede Bitposition des gewählten Schieberings wird dieser Vorgang wiederholt, wobei die Daten auf die SDI-Signalleitung 120 in umgekehrter Ordnung gegeben werden, so daß die letzten Daten als erste eingegeben werden. Die Anzahl der Taktimpulse A und B ist die gleiche wie die Anzahl der Schieberegisterstufen in der gewählten Ringschiebeschaltung.

Wenn Daten seriell von einem Schiebering ausgegeben werden sollen, dann wird die gewünschte Ringschiebeschaltung gewählt und abwechselnd die Taktsignale A und B eingeschaltet. Zu jeder Taktzeit A werden die Daten auf der SDO-Signalleitung 122 abgetastet. Die Taktsignale A und B folgen einander abwechselnd und überlappen sich nicht. Bei der seriellen Ausgabe von Daten werden diejenigen der L1-Kippglieder 242 gewonnen wenn das erste Taktsignal ein B-Takt ist, und die Daten der L2-Kippstufen 244 werden erhalten, wenn das erste Taktsignal ein A-Takt ist.

Die Schaltungsverbindung von Kippgliedern ist in mehr Einzelheiten in der Fig. 4 dargestellt, worin gleiche Nummern für gleiche oder korrespondierende Schaltelemente wie in der Fig. 3 gebracht sind. Vier SRL-Kippglieder 240 sind für die Bildung eines Schieberegisters in der Fig. 4 miteinander verbunden. Der Ausgang des Inverters 272 der ersten Schieberegisterstufe ist mit der SDI-Eingangsleitung des NAND-Gliedes 254 der zweiten Schieberegisterstufe verbunden. In gleicher Weise ist der Ausgang des Inverters 272 der zweiten Schieberegisterstufe mit dem SDI-Eingang des NAND-Gliedes 254 der dritten Schieberegisterstufe und der Ausgang des Inverters 272 dieser Stufe ist mit dem SDI-Eingang des NAND-Gliedes 254 der vierten Schieberegisterstufe verbunden. Das SDO-Signal wird auf die Signalleitung 274 gegeben und kehrt zum Dienstprozessor 28 über die SDO-Signalleitung 122 (Fig. 2) zurück.

In der Fig.5, wo gleiche Nummern für gleiche Teile gebraucht sind, ist der Teil der Schnittstellensteuerschaltung 41 dargestellt, wo die vier über die Signalleitung 100 (Fig. 2) angelieferten diagnostischen Adressen decodiert werden. Im unteren Teil der Figur sind schematisch die Schieberinge 102, 104, 112 und 114 angedeutet. Auf der Seite der Dateneingabe (SDI) ist das erste Kippglied jedes Schieberinges dargestellt und das auf der Datenausgabeseite (SDO) dargestellte Kippglied ist jeweils das letzte Kippglied das entsprechenden Schieberinges. Die Schieberinge 102, 104, 112 und 114 sind von unterschiedlicher Länge, doch haben sie einen gemeinsamen Dateneingang (SDI) über die Signalleitung 120; auf der Datenausgabeseite (SDO) haben sie einen gemeinsamen Datenausgang über die Signalleitung 122.

Die diagnostischen Adressenleitungen 100 sind als einzelne Leitungen 100a, 100b, 100c und 100d dargestellt, die zu den Invertern 300, 302, 304 und 306 führen, deren Ausgangssignale zusammengefaßt und zu UND-Gliedern 308, 310, 312 und 314 geleitet werden, um verschiedene Signale zu erzeugen. Diese sind die diagnostischen Adressen für die Wartungsschnittstelleneinrichtung (SI), die diagnostische Adresse für den Mikroprozessor (MP), die diagnostische Adresse für die Kanalsteuerung (CHAN) und die diagnostische Adresse für die Hauptspeichersteuerung (MS). Die SI-Adresse wird auf die UND-Glieder 316 und 318 gegeben. Die diagnostische Adresse für den Mikroprozessor wird auf die UND-Glieder 320 und 322 gegeben. Die diagnostische Adresse für die Kanalsteuerung wird auf die UND-Glieder 324 und 326 gegeben. Das Signal für die diagnostische Adresse für die Hauptspeichersteuerung wird auf die UND-Glieder 328 und 330 gegeben. Aus der Fig. 5 ist auch zu ersehen, wie die Taktsignale A und B vom Dienstprozessor 28 über die Leitungen 116 und 118 den UND-Gliedern 316 bis 330 zugeführt werden.

Die Aufgabe der UND-Glieder 316 bis 330 besteht darin, die Taktsignale A und B nur derjenigen Ringschiebeschaltung weiterzugeben, die durch eine der vier diagnostischen Adressen angesteuert wird. Wenn beispielsweise der Schnittstellenregister-Schiebering 102 angesteuert werden soll, dann erzeugen die Ausgangssignale der UND-Glieder 316 und 318, welche als Eingangssignale die Taktsignale A und B zusammen mit der diagnostischen Adresse SI erhalten haben, die Taktsignale SI A und SI B für den SI-Schiebering 102. Die restlichen Ringschiebeschaltungen erhalten keine Taktsignale A oder B. Das ist notwendig, weil die den Kippschaltungen zugeführten Taktsignale C1 oder C2 nicht zur gleichen Zeit angewendet werden können wie die Taktsignale A oder B. Wenn es beispielsweise gewünscht wird, den Inhalt der Register des Mikroprozessors 42 auf dem Bildschirm darzustellen, ohne die Hauptspeichersteuerung 46 oder den Steuerspeicher 108 zu beeinflussen, dann wird der Dienstprozessor 28 durch einen Steuerbefehl die Taktsignale 150 an den Mikroprozessor 42 unterbrechen und über einen entsprechenden Befehl die Treibverstärker des Mikroprozessors 42 mittels der Zeitgebersteuerschaltung 82 über die Signalleitung 142 (Fig. 2) nicht durchschalten.

Ein weiterer Grund, die Treiberschaltungen auch für die Schieberinge nicht durchzuschalten, besteht darin, daß der Hauptspeicher 50 ein sogenannter dynamischer Speicher ist und deshalb periodisch wieder aufgefrischt werden muß, damit er seinen Speicherinhalt nicht verliert. Wenn ein Benutzer die Darstellung des Registerinhalts des Mikroprozessors 42 wünscht, dann müssen die Zeitgebersignale an den Mikroprozessor 42 unterbrochen werden. Es ist aber nicht annehmbar, die Zeitgebersignale für die Hauptspeichersteuerung 46 oder den Hauptspeicher 50 (Fig. 1) zu unterbrechen, weil dies bewirken würde, daß der Hauptspeicher 50 seinen Speicherinhalt verliert. Aus diesem Grunde ist es notwendig, eine unabhängige Kontrolle der Zeitgebersignale zu jeder funktionellen Einheit oder zu jedem Schiebering zu haben. Dies ist eine der Aufgaben der Wartungsschnittstelleneinrichtung.

Weil die Ringschiebeschaltungen 102, 104, 112 und 114 eine gemeinsame Datenausgabeleitung 122 (SDO) haben, müssen die Ausgangssignale der letzten Stufen der Schieberinge durch die diagnostischen Adressensignale vorbereitet werden, welche an die UND-Glieder 332, 334, 336 und 338 gegeben werden. Die Ausgangssignale dieser UND-Glieder laufen über ein ODER-Glied 340, um das gemeinsame Datenausgabesignal (SDO) auf der Signalleitung 122 zu bilden.

Zur Verdeutlichung der in der Fig. 2 angedeuteten Zusammenhänge zeigt die Fig. 6 Einzelheiten der Schaltungsverbindungen zwischen dem Schnittstellenregister 84 und dem Schnittstellen-Pufferregister 86. Daten vom Rechenwerk 92 werden dem UND-Glied 350 zugeführt. Das UND-Glied 350 erhält auch das Ladesignal für das Schnittstellen-Pufferregister, das durch den Bestimmungsdecodierkreis 160 erzeugt wird. Das Codesignal für einen Fehler im Rechenwerk wird dem UND-Glied 352 zugeführt, das ebenso ein Fehlersignal erhält. Die Einrichtungen für die Erzeugung des Fehlercodesignal des Rechenwerks sind fest verdrahtet. Die Ausgangssignale der UND-Glieder 350 und 352 werden einem ODER-Glied 354 zugeführt, dessen Ausgangssignal in das Datenfeld des Schnittstellen-Pufferregisters 86 geleitet wird. Das Ladesignal für den Schnittstellen-Pufferspeicher wird auch dem UND-Glied 356 zugeführt, das auch das Signal zum Laden des Bestimmungsregisters von der Zeitgeberschaltung 90 des Mikroprozessors erhält. Das Fehlersignal der Zentraleinheit wird dem UND-Glied 358 zugeleitet, das auch das Taktsignal C2 von der Zeitgebersteuerschaltung 82 erhält. Beide UND-Glieder 356 und 358 erhalten das invertierte Signal zum Abschalten der Treibverstärker des Mikroprozessors, um zu verhindern, daß die Ladesignale für das Schnittstellen-Pufferregister und Fehlersignale vom Rechenwerk abgetastet werden, wenn der Mikroprozessor 42 abgetastet wird. Die Ausgangssignale der UND-Glieder 356 und 358 werden einem ODER-Glied 360 zugeführt, dessen Ausgangssignal den Taktsignaleingängen der Kippschaltungen in dem Schnittstellen-Pufferregister 86 zugeführt wird. Der Datenausgang des Schnittstellen-Pufferregisters 86 wird in das Datenfeld 84a des Schnittstellenregisters 84 geleitet, das auch andere Signale für Befehle erhält, wie Steuersignale der Zentraleinheit, Aufforderung zum Durchschalten, das Taktsignal C2 und das Datenbit 7 des Schnittstellenregisters 84 über ein UND-Glied 362. Das Befehlsfeld 84b des Schnittstellenregisters wird der Befehlsdecodierschaltung 88 zugeführt. Die Ausgangssignale des Datenfeldes 84a des Schnittstellenregisters werden einem UND-Glied 186 zugeführt, das auch das SI-Signal von der Quellendecodierschaltung 162 erhält, um die Daten zum Rechenwerk 92 durchzuschalten.

Auch hier besteht die Wirkungsweise des Schnittstellenregisters 84 und des Schnittstellen-Pufferregisters 86 darin, unabhängige Einrichtungen zum Bewahren der Daten und Befehle zwischen dem Dienstprozessor 28 und dem Mikroprozessor 42 zu sein, weil diese beiden Prozessoren unabhängig voneinander arbeiten. Sie möchten beide beispielsweise gleichzeitig versuchen, miteinander in Verbindung zu treten. Während der Dienstprozessor 28 damit beschäftigt sein kann, den Inhalt des Schnittstellenregisters 84 seriell zu übertragen und asynchron im Verhältnis zum Mikroprozessor 42 einen neuen Befehl einzugeben, können Daten nicht in das Schnittstellenregister 84 eingegeben werden, ohne daß eine besondere Anforderung vom Dienstprozessor 28 dafür vorliegt. Wenn der Mikroprozessor 42 wünscht, Daten zurück zum Dienstprozessor 28 zu geben, dann lädt er diese Daten in das Schnittstellen-Pufferregister 86 durch Ausführen einer Mikroinstruktion vom Steuerspeicher 108. Wenn diese Mikroinstruktion decodiert ist, um ein Ladesignal zu erzeugen, das dem Schnittstellen-Pufferregister 86 zugeführt wird, dann bezeichnet sie auch, daß das Schnittstellen-Pufferregister 86 das Bestimmungsregister ist. Aus diesem Grunde haben die Ergebnisse einer Operation des Rechenwerks 92 oder das Ergebnis einer Bewegung von Daten von einem Register zu einem anderen über die Datensammelleitung des Rechenwerkes in das Schnittstellen-Pufferregister 86 zu gehen. Die Mikroinstruktion mag auch ein Signal erzeugen, eine Anforderung der Zentraleinheit zu setzen, welches Signal der Schnittstellensteuerschaltung 41 zugeführt wird, die ihrerseits die Signalleitung 126 anhebt, um ein Anforderungssignal für die Zentraleinheit an den Dienstprozessor 28 zu geben. Wenn der Dienstprozessor 28 dieses Anforderungssignal der Zentraleinheit quittiert, gibt er das Signal »LESE SIB/ST CPU ZK« über die Schnittstellensteuerschaltung 41 an das UND-Glied 200 (Fig. 2). Wenn das Schnittstellen-Pufferregister 86 einmal geladen wurde, und das Anforderungssignal der Zentraleinheit wurde erzeugt, dann verhindert die Schnittstellensteuerschaltung 41 die Ausführung aller folgenden Befehle, weil angenommen wird, daß die Anforderung von der Zentraleinheit von größerer Bedeutung ist. Das Schnittstellenregister 84 und das Schnittstellen-Pufferregister 86 wirken deshalb als Mechanismus zur gegenseitigen Verriegelung und vermeiden jegliches Auftreten einer Konkurrenzsituation zwischen dem Dienstprozessor 28 und dem Mikroprozessor 42.

Die Fig. 7 veranschaulicht ein Flußdiagramm für die Übermittlung von Daten zwischen dem Dienstprozessor 28 und der Wartungsschnittstelleneinrichtung 40. Das Flußdiagramm zeigt die Folge aller Operationen, wenn der Dienstprozessor 28 einen Befehl an die Wartungschnittstelleneinrichtung 40 gibt. Gemäß Fig. 7a beginnt der Dienstprozessor 28 die Ausführung beim Block 400, indem er die Signalleitung 100 für die diagnostische Adresse (Fig. 2) anhebt. Beispielsweise bezeichnet die Adresse 0001 den SI-Schiebering. Beim Block 402 schiebt der Dienstprozessor 28 seriell ein 20 Bit breites Wort in das Schnittstellenregister 84. Das Register 84 ist 20 Bits lang und eine Folge von binären Daten wird seriell in das Register eingelesen, indem 20 Paare von Taktsignalen A und B vom Dienstprozessor 28 ausgegeben werden. Nachdem diese Daten vollständig eingeschoben sind, braucht die Schnittstellensteuerschaltung 41 die Signalleitungen für die diagnostische Adresse nicht mehr. Beim Block 404 werden diese Leitungen abgeschaltet. Dann hebt der Dienstprozessor 28 beim Block 406 das Signal »SP ANF« an.

Das Anforderungssignal wird der Wartungsschnittstelleneinrichtung 40 zugeführt, um anzuzeigen, daß das Schnittstellenregister 84 Daten enthält, welche decodiert werden können. Die Wartungsschnittstelleneinrichtung 40 erkennt das Anforderungssignal vom Dienstprozessor 28 beim Block 408. Beim Block 410 decodiert die Wartungsschnittstelleneinrichtung 40 das Befehlsfeld des Schnittstellenregisters 84. Entsprechend diesem Befehl und anderen in der Wartungsschnittstelleneinrichtung vorhandenen Bedingungen wird die Schnittstellensteuerschaltung 41 entweder ein Quittungssignal aussenden oder ein Fehlersignal oder beide gleichzeitig, um auf das Anforderungssignal vom Dienstprozessor 28 zu antworten. Diese Funktion wird gemäß dem Block 412 ausgeführt, der ausführlicher in der Fig. 7b dargestellt ist.

Nachdem der Dienstprozessor 28 das Anforderungssignal beim Block 406 ausgesendet hat, wartet er auf eine Antwort von der Schnittstellensteuerschaltung 41 in der Form eines Antwortsignals, eines Fehlersignals oder beider Signale beim Block 414. Der Dienstprozessor 28 quittiert diese Signale und schaltet beim Block 416 das Anforderungssignal aus. Beim Block 418 erkennt die Schnittstellensteuerschaltung 41, daß der Dienstprozessor 28 das Anforderungssignal abgeschaltet hat. Beim Block 420 schaltet die Schnittstellensteuerschaltung 41 das Antwort und/oder das Fehlersignal ab, was beim Block 422 durch den Dienstprozessor 28 erkannt wird. Der Dienstprozessor 28 ist dann frei, einen neuen Befehl durch Wiederbeginnen dieses Prozesses beim Block 400 auszugeben.

In der Fig. 7b sind Einzelheiten der Arbeitsweise der Wartungsschnittsteneinrichtung 40 dargestellt, um das Quittungssignal oder das Fehlersignal oder beide Signale beim Block 412 (Fig. 7a) auszugeben. Die Ausgabe des decodierten Befehlsfeldes des Schnittstellenregisters 24 wird einem Entscheidungsblock 424 zugeführt um zu bestimmen, ob der Befehl gültig ist. Wenn der Befehl ungültig oder undefiniert ist, wird beim Block 426 das Fehlersignal ausgegeben und der Datenfluß kehrt zum Block 414 zurück so daß der Dienstprozessor 28 diese Antwort erkennt.

Wenn die Entscheidung am Entscheidungsblock 424 ergibt, daß der Befehl gültig ist, wird beim Entscheidungsblock 428 eine Entscheidung getroffen, ob die Kippschaltung für die Anforderung der Zentraleinheit gesetzt ist oder gesetzt wird. Wenn diese Kippschaltung gerade dabei ist, gesetzt zu werden, ist das eine Anzeige dafür, daß irgendwelche Vorgänge im Mikroprozessor 42 veranlassen, daß das Schnittstellen-Pufferregister 86 geladen wird, und daß das gerade zusammenfällt mit einem Zeitpunkt, wo der Dienstprozessor 28 einen neuen Befehl ausgeben will. Wenn die Kippschaltung für die Anforderung der Zentraleinheit bereits eingeschaltet ist, dann bedeutet dies, daß Vorgänge im Mikroprozessor 42 veranlaßt haben, daß das Schnittstellen-Pufferregister 86 geladen wird und daß diese Kippschaltung in dem Zeitraum gesetzt worden ist, nachdem die letzte Abtastung durch den Dienstprozessor stattfand. Das wird dadurch erkannt, daß der gerade in Ausführung befindliche Befehl zurückgewiesen wird. Wenn die Entscheidung im Entscheidungsblock 428 bejahend ist, dann wird im Entscheidungsblock 430 eine weitere Entscheidung getroffen, um zu bestimmen, ob dieser Befehl ein Signal »LESE SIB/ST CPU ZK« ist. Wenn der jetzige Befehl nicht dieses Signal ist, dann wird beim Block 432 der Befehl blockiert, um die Zerstörung von Information zu verhindern, welche der Mikroprozessor 42 in das Schnittstellen-Pufferregister 86 gegeben hat. Wenn beim Block 428 die genannte Kippschaltung eingeschaltet ist und der weitergegebene Befehl nicht dieses oben angegebene Signal ist, dann blockiert die Schnittstellensteuerschaltung 41 die Ausführung des Befehls beim Block 434. Es werden das Quittungssignal und das Fehlersignal ausgegeben und an den Block 414 weitergegeben, wo die Signale durch den Dienstprozessor 28 erkannt werden. Diese Antwort veranlaßt, daß der Dienstprozessor ein Signal »LESE SIB/ST CPU ZK« ausgibt, bevor er den zurückgewiesenen Befehl wiederholt.

Wenn beim Block 430 die Entscheidung bezüglich des Signals »LESE SIB/ST CPU ZK« bejahend ist, dann wird die Kippschaltung für die Anforderung der Zentraleinheit beim Block 436 zurückgestellt. Beim Block 438 erfolgt eine Übertragung von Daten vom Schnittstellen-Pufferregister 86 zum Schnittstellenregister 84 und beim Block 440 wird das Quittungssignal ausgegeben. Der Datenfluß geht weiter zum Block 414, wo der Dienstprozessor 28 das Quittungssignal erkennt. Daraufhin gibt der Prozessor 20 Paare von Taktsignalen A und B aus, um den Inhalt des Schnittstellenregisters auszulesen.

Wenn beim Entscheidungsblock 428 die Kippschaltung für die Anforderung der Zentraleinheit nicht gesetzt ist oder gesetzt wird, dann erfolgt eine Entscheidung beim Entscheidungsblock 442, ob der gegenwärtige Befehl das Signal »SP UBR« oder das Signal »SP AUSN« ist. Wenn ein solches Signal nicht vorliegt, ist das ein Anzeichen dafür, daß ein gültiger Befehl vorliegt, der beim Block 444 ausgeführt werden kann. Beim Block 446 wird ein Quittungssignal ausgegeben und dem Block 414 angezeigt. Wenn beim Entscheidungsblock 442 die Entscheidung bejahend war, daß der gegenwärtige Befehl ein solches Unterbrechungssignal ist, dann ist das ein Anzeichen dafür, daß der Befehl Datenübertragungen zwischen dem Dienstprozessor 28 und dem Mikroprozessor 42 ausführen will. Beim Block 448 wird das Bit 14 des Ausnahmeregisters 94 gesetzt. Beim Block 450 wartet der Datenfluß, bis das Mikroprogramm des Mikroprozessors 42 das Bit 14 des Ausnahmeregisters 94 erkennt und das EX-Bit 14 zurückstellt. Das ist ein Anzeichen dafür, daß der Befehl ausgeführt worden ist und beim Block 452 wird das Quittungssignal ausgegeben, um anzuzeigen, daß durch das Mikroprogramm das Datenfeld des Schnittstellenregisters gelesen worden ist. An diesem Punkt kehrt der Datenfluß zum Block 414 zurück, wo der Dienstprozessor 28 das Quittungssignal erkennt.

Die Fig. 8 veranschaulicht einen Teil der logischen Schaltkreise der Schnittstellensteuerschaltung 41 (Fig. 2), welche die Signale »CPU ANF«, »SI UNG«, »QU« und andere Signale für die Anforderung zum Durchschalten von Torschaltungen erzeugt. Das Anforderungssignal für die Zentraleinheit von einer Mikroinstruktion des Mikroprozessors 42 wird einem ODER-Glied 500 zugeführt. Das andere Eingangssignal des ODER-Gliedes 500 ist das Fehlersignal des Rechenwerkes.

Andere Signale wie das Datenbit 6 des Schnittstellenregisters 84, Steuerbefehle vom Befehlsdecodierschaltkreis 88 (Fig. 2) und Anforderungssignale zum Durchschalten werden einem UND-Glied 502 zugeführt, dessen Ausgang zu einem Inverter 504 gelangt. Das Ausgangssignal des Inverters 504 geht zu einem UND-Glied 506, dessen Ausgang mit dem ODER-Glied 500 verbunden ist. Das Ausgangssignal des ODER-Gliedes 500 wird dem L1-Kippglied 508 zugeführt, welches auch das Taktsignal C2 erhält. Der Ausgang des Kippgliedes 508 wird über die Signalleitung 126 dem Dienstprozessor 28 als Anforderungssignal für die Zentraleinheit zugeführt. Das Ausgangssignal der Kippschaltung 508 wird ebenso einem L2-Kippglied 510 zugeführt, welches auch das Taktsignal C1 empfängt. Das Ausgangssignal des Kippgliedes 510 wird als Eingangssignal dem UND-Glied 506 zugeführt.

Der Ausgang des Inverters 504 ist ebenso wie der Ausgang des ODER-Gliedes 500 mit den Eingängen eines UND-Gliedes 512 verbunden. Das Ausgangssignal des Kippgliedes 510 und das des Inverters 504 werden als Eingangssignale einem UND-Glied 514 zugeführt. Die Ausgangssignale der UND-Glieder 512 und 514 gehen zu einem ODER-Glied 516, dessen Ausgang dem L1-Kippglied 518 zur Anzeige eines Fehlers im Befehl zugeführt wird. Das UND-Glied 520 empfängt als Eingangssignal ein Signal, das anzeigt, daß der Befehl ungültig ist und das von der Befehlsdecodierschaltung 88 (Fig. 2) erzeugt wird. Das Ausgangssignal des UND-Gliedes 520 wird zusammen mit dem Ausgangssignal des L1-Kippgliedes 518 einem ODER-Glied 522 zugeführt, welches auf der Signalleitung 130 das Fehlersignal für das Schnittstellenregister erzeugt.

Das Ungültigkeitssignal für einen Maschinenbefehl wird auch an einen Inverter 524 gegeben, dessen Ausgang mit einem UND-Glied 526 verbunden ist. Der Ausgang des UND-Gliedes 526 ist mit einem ODER-Glied 528 verbunden, das auch das Ausgangssignal des SRL-Kippgliedes 518 empfängt, um über die Signalleitung 128 ein Quittungssignal auszugeben.

Die Unterbrechungssignale »SP UBR« und »SP AUSN« von der Befehlsdecodierschaltung 88 werden einem ODER-Glied 530 zugeführt, dessen Ausgangssignal an ein UND-Glied 532 geht. Als weiteres Eingangssignal empfängt das UND-Glied 532 das Signal EX-14 vom Ausnahmeregister 94. Der Ausgang des UND-Gliedes 532 ist mit einem Inverter 534 verbunden, dessen Ausgang mit einem UND-Glied 526 verbunden ist.

Das Anforderungssignal »SP ANF« vom Dienstprozessor 28 wird über die Signalleitung 124 an ein L1-Kippglied 536 gegeben, das ebenfalls das Taktsignal C1 erhält. Der Ausgang des Kippgliedes 536 ist mit einem L2-Kippglied 538 verbunden, das als weiteres Eingangssignal das Taktsignal C2 erhält. Der Ausgang des Kippgliedes 538 ist zu einem L1-Kippglied 540 geführt, das als Eingang auch das Taktsignal C1 erhält. Der Ausgang des Kippgliedes 540 führt zu einem L2-Kippglied 542, das als weiteres Eingangssignal das Taktsignal C2 erhält. Der Ausgang des Kippgliedes 542 führt zu den UND-Gliedern 520 und 526. Der Ausgang des Kippgliedes 540 ist auch mit einem Inverter 544 verbunden. Der Ausgang des ODER-Gliedes 516 ist mit einem Inverter 546 verbunden. Die Ausgänge der Inverter 544 und 546 werden gemeinsam mit dem Ausgang des Kippgliedes 536 mit einem UND-Glied 548 verbunden, um ein Anforderungssignal zum Durchschalten zu erzeugen, das auf die Signalleitung 134 gesendet wird.

Der Ausgang des Kippgliedes 536 ist auch an ein UND-Glied 540 geführt und über einen Inverter 542 zu einem UND-Glied 554. Die UND-Glieder 550 und 554 erhalten als weiteres Eingangssignal das Taktsignal C2. Das UND-Glied 550 empfängt das Ausgangssignal des Inverters 544 und das UND-Glied 554 empfängt das Ausgangssignal des Kippgliedes 540. Die Ausgangssignale der UND-Glieder 550 und 544 werden auf ein ODER-Glied 556 gegeben, dessen Ausgangssignal als Taktsignal zum SRL-Kippglied 518 führt. Die Aufgabe der Kippglieder 536 und 358 besteht darin, das Anforderungssignal »SP ANF« mit den Taktsignalen C1 und C2 zu synchronisieren und auf der Leitung 134 ein Anforderungssignal zum Durchschalten auszugeben.

In der Fig. 9 sind die logischen Schaltkreise dargestellt, welche die Befehlsdecodierschaltung 88 (Fig. 2) enthalten. Die vier Datenbits vom Befehlsfeld 84b des Schnittstellenregisters 84 (Fig. 6) werden direkt oder über Inverter 562, 564, 566 und 568 zu UND-Gliedern 570, 572, 574, 576, 578, 580, 582 und 584 geführt. Der Ausgang des UND-Gliedes 570 erzeugt den Befehl zum unwirksam machen der Treibverstärker und besteht aus dem Bitmuster 1000. Das UND-Glied 572 erzeugt den Befehl »SP AUSN«, das durch die Bitfolge 0100 dargestelt wird. Das UND-Glied 574 erzeugt das Steuersignal für die Zentraleinheit, das aus der Bitfolge 0100 besteht. Das UND-Glied 576 erzeugt das Signal »SP UBR«, das aus der Bitfolge 0101 besteht. Das UND-glied 576 erzeugt das Taktsignal A, bestehend aus den Bits 1010. Das UND-Glied 578 erzeugt das Taktsignal B das aus der Bitfolge 1011 besteht. Die Ausgänge der UND-Glieder 580 und 582 sind mit einem ODER-Glied 586 verbunden, dessen Ausgang das Ungültigkeitssignal für den Befehl ist. Das Signal »SP AUSN« wird einem UND-Glied 588 zugeführt zusammen mit einem Anforderungssignal zum Durchschalten, das durch die Schnittstellensteuerschaltung 41 (Fig. 2) erzeugt und das ebenso einem UND-Glied 590 zugeführt wird. Der Ausgang des UND-Gliedes 548 ist zu einem ODER-Glied geführt. Das Unterbrechungssignal »SP UBR« wird einem UND-Glied 590 zugeführt. Der Ausgang des UND-Gliedes 590 erzeugt ein Adressensignal der erzwungenen Unterbrechung, welches über die Signalleitung 138 an einen Schaltkreis 140 für die nächste Adresse (Fig. 2) gegeben wird. Das Ausgangssignal des UND-Gliedes 590 wird auch einem ODER-Glied 592 zugeführt, um das Signal zum Setzen des Bits EX-14 zu erzeugen, das an das Ausnahmeregister 94 (Fig. 2) gegeben wird.

Die Fig. 10 veranschaulicht die Kippglieder zum Sperren von Betriebsfunktionen oder zur Erzeugung von Taktsignalen, die einen Teil der Zeitgebersteuerschaltung 82 (Fig. 2) bilden. Das Datenbit 1 des Schnittstellenregisters 84 wird einem L1-Kippglied 600 zugeführt. Das Datenbit 3 des Schnittstellenregisters wird einem L1-Kippglied 602 zugeführt. Das Anforderungssignal zum Durchschalten oder zum Sperren der Treibverstärker wird zusammen mit dem Taktsignal C2 einem UND-Glied 604 zugeführt, dessen Ausgangssignal an ein SRL-Kippglied 600 und an ein SRL-Kippglied 602 gegeben wird. Das Ausgangssignal des SRL-Kippgliedes 600 erzeugt die Signale zum Sperren der Treibverstärker für die Kanäle, welche auf die Signalleitung 144 (Fig. 2) gegeben werden. Das Ausgangssignal des SRL-Kippgliedes 602 erzeugt das Signal zum Sperren der Treibverstärker für den Mikroprozessor 42, das über die Signalleitung 142 (Fig. 2) gegeben wird. Das Ausgangssignal des UND-Gliedes 604 wird auch an ein L1-Kippglied 606 gegeben, das als weiteres Eingangssignal das Datenbit 4 des Schnittstellenregisters 84 empfängt, um das Signal zum Sperren der Treibverstärker für den Hauptspeicher 50 (Fig. 1) zu erzeugen.

Das Datenbit 9 des Schnittstellenregisters 84 wird einem L1-Kippglied 608 zugeführt. Das Anforderungssignal zum Durchschalten die Steuersignale für die Taktsignale A und das Taktsignal C2 werden einem UND-Glied 610 zugeführt, dessen Ausgangssignal an das SRL-Kippglied 608 gegeben wird. Der Ausgang des Kippgliedes 608 wird einem L2-Kippglied 612 zugeführt, das als weiteres Eingangssignal das Taktsignal C1 erhält. Die Ausgangssignale der Kippglieder 608 und 612 werden den UND-Gliedern 614 und 616 zugeführt, welche auch die Taktsignale C1 und C2 erhalten. Die Ausgangssignale der UND-Glieder 614 und 616 erzeugen die Taktsignale C1 und C2, welche der Kanalsteuerung 44 über eine Signalleitung 146 (Fig. 2) zugeführt werden.

Das Steuersignal für das Taktsignal B wird einem UND-Glied 618 zugeführt, dessen Ausgang mit dem L1-Kippglied 620 verbunden ist. Das Ausgangssignal des Kippgliedes 620 wird einem L2-Kippglied 622 zugeführt. Die Ausgangssignale der Kippglieder 620 und 622 werden an die UND-Glieder 624 und 626 gegeben, welche als weitere Eingangssignale die Taktsignale C1 und C2 erhalten. Die Ausgangssignale der UND-Glieder 624 und 626 erzeugen die Taktsignale C1 und C2 für den Mikroprozessor 42 über die Signalleitung 150 (Fig. 2).

Das Datenbit 13 des Schnittstellenregisters 84 wird auf ein L1-Kippglied 628 gegeben, das als anderes Eingangssignal das Ausgangssignal des UND-Gliedes 618 erhält. Der Ausgang des Kippgliedes 628 ist zu einem L2-Kippglied 630 geführt. Die Ausgangssignale der Kippglieder 628 und 630 werden UND-Gliedern 632 und 634 zugeführt, welche als weitere Eingangssignale die Taktsignale C1 und C2 erhalten. Die Ausgangssignale der UND-Glieder 632 und 634 erzeugen die Taktsignale C1 und C2 für die Hauptspeichersteuerung 26 über die Signalleitung 148 (Fig. 2).

In der Fig. 11 ist ein Teil der logischen Schaltkreise der Zeitgeberschaltung 90 (Fig. 2) zur Erzeugung der Taktsignale für den Mikroprozessor dargestellt. Die Zeitgeberschaltung 90 erzeugt das Ladesignal für das Bestimmungsregister, das über die Signalleitung 159 an die Bestimmungsdecodierschaltung 160 gegeben wird. Das Taktsignal C2 und das von der Wartungsschnittstelleneinrichtung 40 über die Signalleitung 152 gelieferte Einschaltsignal für die L2-Kippglieder werden einem UND-Glied 650 zugeführt, dessen Ausgangssignal das Taktsignal für die L1-Kippglieder 652, 654 und 656 bildet. Das Taktsignal C1 und das von der Wartungsschnittstelleneinrichtung 40 über die Signalleitung 152 gelieferte Einschaltsignal für die L1-Kippglieder werden einem UND-Glied 658 zugeführt, dessen Ausgang das Taktsignal für die L1-Kippglieder 660, 662 und 664 bildet.

Das von der Quellendecodierschaltung 162 erzeugte Signal für die Anzeige eines verkürzten Maschinenzyklus wird über die Signalleitung 164 (Fig. 2) einem UND-Glied 666 und über einen Inverter 668 den UND-Gliedern 670 und 672 zugeführt. Das UND-Glied 666 empfängt als weiteres Eingangssignal das Ausgangssignal des Kippgliedes 652. Das UND-Glied 672 empfängt als weiteres Eingangssignal das Ausgangssignal des Kippgliedes 654. Die Ausgangssignale der UND-Glieder 666 und 672 werden einem ODER-Glied 674 zugeführt, das sein Ausgangssignal als Eingangssignal zu einem Kippglied 662 sendet.

Das Ausgangssignal des Kippgliedes 664 wird einem UND-Glied 676 zugeführt, welches als weiteres Eingangssignal den Ausgang des UND-Gliedes 658 erhält, um ein Ladesignal für das Bestimmungsregister über eine Signalleitung 159 zu erzeugen.

Fig. 12 zeigt als Zeitdiagramm einige Impulsfolgen. Die Taktsignale C1 und C2 erfolgen abwechselnd und überlappen sich nicht gegenseitig. Die nächste Zeile gibt die Maschinenzyklen des Mikroprozessors an. Darunter wird die zeitliche Beziehung zu einem Signal für einen verkürzten Maschinenzyklus gezeigt. Die unterste Zeile zeigt die Ladesignale für das Bestimmungsregister. Diese Ladesignale bilden den letzten Taktimpuls eines Mikroinstruktionenzyklus, unabhängig davon, ob der Zyklus ein kurzer oder ein langer ist.

In der Fig. 13 ist ein Teil der logischen Schaltungen der Schnittstellensteuerschaltung 41 dargestellt. Der dargestellte Schaltungsteil erzeugt die Einschaltsignale für die L1-Kippglieder und die L2-Kippglieder, welche der Zeitgeberschaltung zur Erzeugung der Taktsignale für den Mikroprozessor über eine Signalleitung 152 zugeführt werden. Diese Signale werden vom Mikroprozessor 42 dafür gebraucht, die Ausführung von Mikroinstruktionen zu steuern. Die Signale werden UND-Gliedern 650 und 658 zugeführt, um die Zeitgeberschaltung 90 des Mikroprozessors zu sperren und dadurch die Erzeugung von Taktsignalen zu verhindern, die zur Ausführung einer Mikroinstruktion durch den Mikroprozessor 42 gebraucht werden.

Die Datenbits 8 und 9 des Schnittstellenregisters 84 werden einem ODER-Glied 688 zugeführt, dessen Ausgangssignal an ein UND-Glied 690 geht. Als weiteres Eingangssignal empfängt das UND-Glied 690 das Anforderungssignal zum Durchschalten und ein Steuersignal von der Zentraleinheit. Das Ausgangssignal des UND-Gliedes 690 wird zusammen mit dem Ausgangssignal des UND-Gliedes 692 einem ODER-Glied 694 zugeführt. Dessen Ausgang ist mit einem L1-Kippglied 696 verbunden, welches als weiteres Eingangssignal das Taktsignal C2 erhält. Das Ausgangssignal des Kippgliedes 696 geht als Eingangssignal zu einem L2-Kippglied 698, das als anderes Eingangssignal das Taktsignal C1 erhält. Der Ausgang des Kippgliedes 698 führt zu einem weiteren Eingang des UND-Gliedes 692 und zu einem Inverter 700. Dieser liefert ein Eingangssignal an das UND-Glied 702, das über einen Inverter 704 ein Fehlersignal vom Rechenwerk erhält. Der Ausgang des Inverters 704 wird auch einem UND-Glied 706 zugeführt, das als weitere Eingangssignale Steuersignale von der Zentraleinheit und Anforderungssignale zum Durchschalten erhält, sowie das Ausgangssignal des ODER-Gliedes 712. Die Ausgangssignale der UND-Glieder 702 und 706 werden einem ODER-Glied 708 zugeführt, dessen Ausgangssignal an ein L1-Kippglied 710 geht.

Die Datenbits 9 und 10 des Schnittstellenregisters 84 werden einem ODER-Glied 712 zugeführt, dessen Ausgangssignal zu einem UND-Glied 814 geht. Dieses empfängt als weitere Eingangssignale das Anforderungssignal zum Durchschalten, Steuersignale von der Zentraleinheit und das Taktsignal C2. Das Ausgangssignal des UND-Gliedes 714 geht zusammen mit dem Ladesignal des Bestimmungsregisters an ein ODER-Glied 716. Das Ausgangssignal des ODER-Gliedes 716 wird dem L1-Takteingang eines SRL-Kippgliedes 710 zugeführt, dessen Ausgangssignal an ein L2-Kippglied 718 geht. Diese Anordnung ermöglicht, daß das Einschaltkippglied gesetzt werden kann durch das Startsignal des Mikroprozessors und durch Befehle für einzelne Maschinenzyklen des Dienstprozessors 28 (vorausgesetzt, daß kein Fehlersignal vom Rechenwerk vorliegt, und daß das Einschaltkippglied zurückgestellt werden kann zur Zeit, wenn das Bestimmungsregister geladen wird, wenn das Haltekippglied gesetzt ist oder ein Fehler im Rechenwerk auftritt). Das L2-Kippglied 718 empfängt als anderes Eingangssignal das Taktsignal C1. Die Signale der Einschaltkippglieder L1 und L2 werden über die Signalleitung 152 der Zeitgeberschaltung für die Erzeugung der Taktsignale des Mikroprozessors gegeben. Das L2-Signal der zugehörigen Einschalt-Kippschaltung wird auch an die UND-Glieder 702 und 692 gegeben.

Diese Anordnung ermöglicht dem Dienstprozessor, die Kippschaltungen für das Anhalten und/oder das Einschalten eines Durchlaufes zu setzen. Wenn das Stop-Kippglied gesetzt ist, bleibt es gesetzt, bis das Durchlauf-Kippglied zurückgestellt wird. Wenn das Durchlauf-Kippglied gesetzt ist, bleibt es gesetzt, bis das Stop-Kippglied gesetzt wird oder ein Fehler des Rechenwerkes signalisiert wird. Die Schaltzustände des Durchlauf-Kippgliedes L1 und L2 steuern die Erzeugung der Zeitsignale des Mikroprozessors, wie anhand der Fig. 11 beschrieben ist.

Der Dienstprozessor 28 und die Zentraleinheit 20 benutzen die oben beschriebene Fähigkeit, Daten seriell zu übertragen oder abzufragen. Unter Benutzung der Schnittstellensteuerleitungen kann der Dienstprozessor 28 Befehle an die Zentraleinheit 20 über das Schnittstellenregister 84 geben. Unter Benutzung der entsprechenden Arbeitsweise der Zentraleinheit und ihrer Ringschiebeschaltungen 102, 104, 112 und 114 kann der Dienstprozessor 28 zahlreiche Tätigkeiten ausführen, wie die Diagnose der Schaltung oder verschiedenartige Ladevorgänge.

Das Schnittstellenregister 84 ist ein 20 Bit breites Register. Befehle können in das Schnittstellenregister 84 seriell geladen werden und ihre Ausführung gesteuert und überwacht. Die Fig. 14 zeigt eine Übersicht über den möglichen Dateninhalt mit einem 4 Bit breiten Befehlsfeld und einem 16 Bit breiten Datenfeld. Die Zeilen sind nach den 16 verschiedenen Möglichkeiten des Inhaltes des Befehlsfeldes geordnet. Die ersten vier Zeilen definieren keine Befehle, die im Rahmen dieser Erfindung gebraucht werden. Die beiden ersten Zeilen »Ersatz 0« und »Ersatz 1« sind nicht definiert und würden, wenn sie gebraucht werden, einen Fehler im Schnittstellenregister anzeigen. Die beiden folgenden Zeilen »Reserve 2« und »Reserve 3« wären gültige Befehle, werden aber im beschriebenen Zusammenhang nicht gebraucht.

Der Ausnahmebefehl »AUSN« in der fünften Zeile wird durch den Dienstprozessor 28 dazu gebraucht, Daten und Befehle an das Mikroprogramm (HMC) zu geben. Dieser Befehl veranlaßt die Einschaltung des Bits 14 im Ausnahmeregister 94 (EX). Dieses Bit wird periodisch durch das Mikroprogramm abgefragt. Es wird dauernd abgefragt, wenn der Mikroprozessor im Wartezustand oder im gestoppten Zustand ist. Weiter wird es abgefragt am Ende jedes Durchlaufes von Instruktionen des Mikroprogramms. Wenn das Mikroprogramm feststellt, daß das EX-Bit 14 eingeschaltet ist, wird das Datenfeld des Schnittstellenregisters abgefragt und eine Quittung in das Schnittstellen-Pufferregister 86 gesetzt. Dann wird das Bit 14 im Ausnahmeregister 94 zurückgestellt. Wenn der Befehl »AUSN« gesendet wird, wird ein Quittungssignal solange nicht ausgegeben, bis durch das Mikroprogramm das EX-Bit 14 zurückgestellt ist.

Weil dieser Befehl vom Dienst des Mikroprogramms abhängt, kann er nicht ausgegeben werden, falls nicht der Steuerspeicher 108 der Zentraleinheit mit entsprechenden Daten des Mikroprogramms geladen ist, um diesen Befehl zu unterstützen. Das gilt unter der Voraussetzung, daß der Mikroprozessor 42 in Betrieb ist. Wenn die Zentraleinheit 20 in Betrieb ist, entweder beim Durchlauf eines Programmschrittes oder im Wartezustand, oder das Mikroprogramm ist gerade gestoppt, dann werden die Daten des Schnittstellenregisters bei dem Befehl »AUSN« im Befehlsfeld durch das Mikroprogramm als ein Maschinenbefehl interpretiert. Bei der Ausführung solcher Befehle sind gewöhnlich Datenübertragungen zwischen dem Dienstprozessor 28 und dem Mikroprogramm notwendig. Der Ausnahmebefehl wird dazu benutzt, diese zusätzlichen Daten geradeso wie den ursprünglichen Befehl weiter zu geben. Solche Steuerbits werden als sechzehn mögliche Befehle verschlüsselt, und die entsprechenden Kennzeichenbits und Parameter haben unterschiedliche Bedeutung für jeden der Befehle.

Wenn ein solcher Ausnahmebefehl durch das Mikroprogramm empfangen wird, wird das Schnittstellenregister nachgefragt, eine Antwort in das Schnittstellen-Pufferregister 86 gegeben und das EX-Bit 14 des Ausnahmeregisters 94 zurückgestellt. In solchen Fällen, wenn der Dienstprozessor 28 einen Befehl an das Mikroprogramm gibt, dann zeigt die in das Schnittstellen-Pufferregister 86 gegebene Antwort an, ob der Befehl angenommen oder zurückgewiesen wurde. Das Signal X'4000' bedeutet, daß der Befehl durch das Mikroprogramm angenommen wurde und gerade ausgeführt wird. X'4400' bedeutet, daß der Ausnahmebefehl von der Zentraleinheit 20 angenommen wurde und als gültiger Befehl durch das Mikroprogramm angesehen wird, daß jedoch das Mikroprogramm den Befehl zurückgewiesen hat, weil er nicht unter den richtigen Umständen gegeben wurde. X'4500' bedeutet, daß der Befehl zurückgewiesen wurde, weil er nicht zu den Befehlen gehört, die im Mikroprogramm definiert sind.

Einige dieser Befehle an das Mikroprogramm erfordern, daß zusätzliche Datenübertragungen zwischen dem Dienstprozessor 28 und dem Mikroprogramm stattfinden, um den Befehl zu vervollständigen. Bei diesen Datenübertragungen wird der Ausnahmebefehl geradeso wie bei der Übertragung von Befehlen verwendet. Die Anzahl und der Bestimmungsort für solche Datenübertragungen wird durch die Abmachungen bestimmt, die für den gerade ausgeführten Befehl gelten. Alle sechzehn Datenbits des Datenfeldes werden für solche Übertragungen verwendet.

Wenn der Dienstprozessor 28 Daten an das Mikroprogramm überträgt, gebraucht er den Ausnahmebefehl zusammen mit den sechzehn Bits des Datenfeldes im Schnittstellenregister 84. Das EX-Bit 14 des Ausnahmeregisters 94 wird gesetzt, was dadurch dem Mikroprogramm anzeigt, daß die Daten im Schnittstellenregister 84 verfügbar sind. Das Mikroprogramm holt sich die Daten aus dem Schnittstellenregister 84 heraus, setzt das Signal X'4000' in das Schnittstellen-Pufferregister 86, was die Annahme anzeigt, und stellt das EX-Bit 14 zurück. Dadurch wird ein Quittungssignal eingeschaltet, das dem Dienstprozessor 28 anzeigt, daß die Datenübertragung vollständig beendet ist.

Der Dienstprozessor 28 kann die Daten aus dem Schnittstellen-Pufferregister 86 entnehmen, um die Annahme zu verifizieren. Er muß es aber nicht. Wenn der Dienstprozessor 28 Daten vom Mikroprogramm empfängt, benutzt er den Ausnahmebefehl mit einem Datenfeld des Schnittstellenregisters 84, das lauter Nullen enthält. Dadurch wird das EX-Bit 14 des Ausnahmeregisters 94 gesetzt, was dadurch dem Mikroprogramm anzeigt, daß der Dienstprozessor 28 bereit ist, diese Daten zu empfangen. Dann setzt das Mikroprogramm die zu übertragenden Daten in das Schnittstellen-Pufferregister 86 und stellt das EX-Bit 14 zurück. Es wird ein Quittungssignal gesendet, das dem Dienstprozessor 28 anzeigt, daß die Daten im Schnittstellen-Pufferregister 86 verfügbar sind. Dann gibt der Dienstprozessor 28 ein Steuersignal für die Zentraleinheit aus, den Inhalt des Schnittstellen-Pufferregisters in das Schnittstellenregister zu lesen. Nach der seriellen Übertragung der Daten ist diese Übertragung beendet.

Die sechste Zeile zeigt den Unterbrechungsbefehl »UBR«. Mit Hilfe dieses Befehles kann der Dienstprozessor 28 Dienst vom Mikroprogramm anfordern. Einige dieser Befehle können nur angenommen werden, wenn das Mikroprogramm sich in der Stop-Routine befindet. Der Unterbrechungsbefehl ermöglicht dem Dienstprozessor 28, einen Durchlauf des Mikroprozessors 42 zu beginnen. Das Unterbrechungssignal schaltet das EX-Bit 14 des Ausnahmeregisters 94 ein und die Einheit welche den Unterbrechungsbefehl behandelt, setzt ein Signal X'4000', in das Schnittstellen-Pufferregister 86; um die Annahme des Befehls anzuzeigen und stellt das EX-Bit 14 zurück, was die Aussendung eines Quittungssignales bewirkt. Nach der Annahme des Befehls nimmt das Mikroprogramm den Betrieb bei der gleichen Routine wieder auf, bei der die Unterbrechung erfolgte.

In der siebenten Zeile steht der Steuerbefehl für die Zentraleinheit »CPU ST«. Dieser Befehl wird dazu benutzt, verschiedene Funktionen in der Zentraleinheit 20 zu steuern. Dazu wird auch das Datenfeld benutzt.

Bit 6 — wird dazu benutzt, eine Anforderung der Zentraleinheit zurückzustellen. Wenn die Zentraleinheit 20 eine Botschaft zur Weitergabe an den Dienstprozessor 28 hat, setzt sie diese Daten in das Schnittstellen-Pufferregister 86 und schaltet das Anforderungssignal für die Zentraleinheit ein. Der Dienstprozessor 28 muß die dazugehörige Signalleitung überwachen und beim Auftreten dieses Signales muß ein Steuerbefehl für die Zentraleinheit ausgegeben werden. Auch das Bit 7 sollte eingeschaltet sein, um für die Datenausgabe die Daten vom Schnittstellen-Pufferregister 86 in das Schnittstellenregister 84 zu übertragen.

Bit 7 — bedeutet, daß das Schnittstellen-Pufferregister ausgelesen werden soll. Wenn von der Zentraleinheit 20 an den Dienstprozessor 28 Daten zu übertragen sind, setzt die Zentraleinheit diese Daten in das Schnittstellen-Pufferregister 86. Für die Übertragung dieser Daten müssen sie zunächst vom Schnittstellen-Pufferregister 86 in das Schnittstellenregister 87 verschoben und dann ausgegeben werden. Dieses Bit veranlaßt das Schnittstellen-Pufferregister 86, Daten in das Schnittstellenregister 84 zu übertragen.

Bit 8 — dieses Bit wird dafür gebraucht, den Mikroprozessor 42 zu stoppen, d. h. einen Durchlauf zu beenden. Es sperrt den Mikroprozessor 42 vom Holen von Instruktionen des Mikroprogramms und von der Ausführung.

Bit 9 — dieses Bit wird dazu benutzt, den Mikroprozessor 42 zu veranlassen, eine Mikroinstruktion der Zentraleinheit zu holen und auszuführen.

Bit 10 — dieses Bit wird dazu gebraucht, den Mikroprozessor 42 für die Ausführung von Programmschritten zu starten.

In der neunten Zeile steht der Befehl »SPERRE«. Wenn Daten in eine der Ringschiebeschaltungen eingebracht werden oder aus ihr ausgelesen, dann treten in diesem Betriebsbereich Signale mehr oder weniger zufällig auf. Es gibt zwei Arten von Betriebsverfahren, solche Signale zu ignorieren. Eine Sperre kann einerseits dadurch erfolgen, daß man deren Aussendung an der Quelle sperrt oder daß man in gewissen Betriebsbereichen den Empfang solcher Signale verhindert. Mit diesem Befehl werden beide Möglichkeiten in der Zentraleinheit 20 benutzt.

Bit 1 — dieses Bit steuert ein Kippglied, das die Kanaltreiberverstärker sperrt, so daß der Kanalschiebering 112 geschoben werden kann, ohne daß falsche Befehle an Einrichtungen weitergegeben werden, die an die Kanalsteuerung angeschlossen sind. Eine Eins zeigt an, daß die Treiberverstärker gesperrt werden sollen.

Bit 3 — dieses Bit steuert ein Kippglied, das die Treibverstärker des Mikroprozessors für den Steuerspeicher 108, den Hauptspeicher 46 und die Schnittstellensteuerschaltung 41 sperrt, so daß die Ringschiebeschaltung 104 des Mikroprozessors durchgetestet werden kann, ohne andere Schaltungsteile zu beeinflussen. Eine binäre Eins zeigt an, daß die Treibverstärker gesperrt werden sollen.

Bit 6 — dieses Bit steuert ein Kippglied, das die Steuerschaltungen zur Wiederauffrischung des Hauptspeichers 50 von den übrigen Ringschaltungen abschirmt, so daß Daten in ihnen geschoben werden können, ohne die Wiederauffrischung des Hauptspeichers 50 ungünstig zu beeinflussen. Eine binäre Eins zeigt an, daß diese Abschirmung erfolgen soll.

In der elften Zeile steht der Steuerbefehl »A-TAKT«. Dieser Befehl dient dazu, gewisse Unterschaltkreise der Zeitgeberschaltungen freizuschalten. Dieses Freischalten von Taktsignalen wird auch mit dem Befehl »B-TAKT« vorgenommen, der in der nächsten Zeile steht.

Bit 9 — dieses Bit wird dazu verwendet, das Kippglied zu setzen und zurückzustellen, welches die Taktsignale des datenverarbeitenden Systems C1 und C2 an die Kanalsteuerung frei gibt. Eine binäre Eins setzt das Kippglied und gibt die Taktsignale frei. Wenn die Taktsignale freigegeben werden, beginnen sie mit einem Signal C1, und wenn sie gestoppt werden, ist das letzte Taktsignal ein Signal C2.

In der zwölften Zeile steht der Steuerbefehl »B-TAKT« — dieser Befehl wird dazu gebraucht, die übrigen Zeitgeberschaltungen der Zentraleinheit zu steuern, welche nicht von dem obengenannten Befehl »A-TAKT« gesteuert werden.

Bit 9 — dieses Bit wird dazu gebraucht, das Kippglied zu setzen und zurückzustellen, das für den Mikroprozessor 72 die Taktsignale C1/C2 freigibt. Eine binäre Eins setzt das entsprechende Kippglied und gibt die Taktsignale frei. Nach der Freigabe beginnen die Signale mit einem C1, und wenn sie gestoppt werden ist das letzte Taktsignal ein C2.

Bit 13 — dieses Bit wird dazu gebraucht, das Kippglied zu setzen und zurückzustellen, das die Taktsignale C1/C2 für die Hauptspeichersteuerung 46 freigibt. Eine binäre Eins setzt das Kippglied und gibt die Taktsignale frei. Nach der Freigabe beginnen sie mit einem Signal C1, und wenn sie gestoppt werden, ist das letzte Taktsignal ein C2.

Aus der vorhergehenden Beschreibung ist ersichtlich, daß die Erfindung eine Wartungsschnittstelleneinrichtung bereitstellt für ein datenverarbeitendes System mit einem Dienstprozessor und einer Zentraleinheit, die asynchron zueinander arbeiten. Die Einrichtung enthält Schaltkreise zum Synchronisieren des Dienstprozessors mit der Zentraleinheit und Decodiereinrichtungen zum Interpretieren von Befehlen des Dienstprozessors an die Zentraleinheit. Ferner enthält die Einrichtung Schaltkreise, die auf Steuerbefehle von der Zentraleinheit reagieren. Die Bauweise nach dem LSSD-Prinzip erleichtert die Wartungsarbeit durch einfache Diagnose, wobei Betriebsbereiche nach Bedarf von den übrigen Teilen der Anlage gesperrt werden. Auch weitere Funktionen sind mittels der Wartungsschnittstelleneinrichtung möglich wie beispielsweise Start oder Stop eines Programmdurchlaufs, einzelne Maschinenzyklen oder das erste Laden eines Mikroprogramms.

## Patentansprüche

1. Wartungsschnittstelleneinrichtung für eine datenverarbeitende Anlage mit einer zentralen Verarbeitungseinheit und mit einem Dienstprozessor, der Einrichtungen zum Senden und Empfangen von Daten enthält, der mit einer Benutzerendstelle zusammenarbeitet und der Einrichtungen zum Erzeugen von Befehlen besitzt, wobei ferner die zentrale Verarbeitungseinheit einen Mikroprozessor enthält, das asynchron zum Dienstprozessor arbeitet, dadurch gekennzeichnet,

— daß die Wartungsschnittstelleneinrichtung (40) zwischen dem Dienstprozessor (28) und dem Mikroprozessor (42) angeordnet und sowohl für den Datenaustausch zwischen Benutzer und zentraler Verarbeitungseinheit in einer ersten Betriebsart, als auch für Überwachung und Testen durch Bedienungspersonal in einer zweiten Betriebsart, vorgesehen ist,

— daß sie ein Schnittstellenregister (84) enthält, das nur vom Dienstprozessor (28) geladen werden kann, aber sowohl vom Dienstprozessor (28) als auch vom Mikroprozessor (42) ausgelesen werden kann, und daß sie ein Schnittstellen-Pufferregister (86) enthält, das nur vom Mikroprozessor (42) geladen werden kann und das seine Daten an das genannte Schnittstellenregister (84) ausgibt,

— daß ferner eine Befehlsdecodierschaltung (88) mit einem Befehlsfeld (84b) im Schnittstellenregister (84) verbunden ist,

— und daß außerdem eine Schnittstellensteuer- und Zeitgeberanordnung (41, 82) vorgesehen ist zur Steuerung und Überwachung des Datenverkehrs sowie zum Bereitstellen, Unterbrechen oder Durchschalten von unterschiedlichen Taktsignalen an einzelne Betriebsbereiche der zentralen Verarbeitungseinheit in Abhängigkeit von der jeweiligen Betriebsart, sowie mit wahlweise aktivierbaren Testleitungen (104) zur Verbindung bestimmter Funktionselemente des Mikroprozessors in einer Schieberegisteranordnung.

2. Wartungsschnittstelleneinrichtung nach Anspruch 1, dadurch gekennzeichnet, daß das Schnittstellenregister (84) aus Kippstufen (240) mit je einem als Teil eines Schieberegisters schaltbaren L1-Kippglied (242) und mit je einem gleichermaßen schaltbaren L2-Kippglied (244) aufgebaut ist, so daß das Schnittstellenregister wahlweise über eine Ringleitung (102) als Schieberegister betrieben, durch spezielle Dienstprozessor-Taktsignale (A, B) gesteuert und mit der Schnittstellensteuerschaltung verbunden werden kann, oder als Parallelregister mit dem Schnittstellenpufferregister (86) und anderen Funktionselementen zusammenarbeiten kann.

3. Wartungsschnittstelleneinrichtung nach Anspruch 1, dadurch gekennzeichnet, daß zusätzliche wahlweise aktivierbare Testleitungen (112, 114) vorgesehen sind zur Verbindung weiterer ausgewählter Funktionseinheiten (44, 46) der zentralen Verarbeitungseinheit mit der Wartungsschnittstelleneinrichtung in einer Schieberegisteranordnung.

4. Wartungsschnittstelleneinrichtung nach Anspruch 1, dadurch gekennzeichnet, daß die Schnittstellensteuer- und Zeitgeberanordnung (41, 82) Einrichtungen (116, 118, 316 . . . 301, 146, 148, 150, 610 . . . 634) enthält, um an Funktionseinheiten (42, 44, 46) der zentralen Verarbeitungseinheit entweder in der Wartungsschnittstelleneinrichtung erzeugte Betriebstaktsignale (C1, C2) oder vom Dienstprozessor erhaltene Testtaktsignale (A, B) wahlweise zu verteilen.

5. Wartungsschnittstelleneinrichtung nach Anspruch 1, dadurch gekennzeichnet, daß die Schnittstellensteuer- und Zeitgeberanordnung (41, 82) Einrichtungen (600, 602, 604, 606) enthält, um aufgrund von Steuersignalen aus dem Dienstprozessor (ANF, SPERRE) und aufgrund von im Schnittstellenregister (84) vorliegenden Datenbits selektive Sperrsignale (SP CHAN, SP MP, SP MS) für Funktionseinheiten der zentralen Verarbeitungseinheit zu erzeugen.

6. Verfahren zum Betrieb der Einrichtung nach Anspruch 1, dadurch gekennzeichnet, daß zum Einleiten von Datenverkehr von dem Dienstprozessor (28) zur Zentraleinheit (20) der Dienstprozessor Befehle an die Wartungsschnittstelleneinrichtung (40) ausgibt, daß Befehle und Daten in das Schnittstellenregister (84) seriell eingegeben werden, daß die Befehle in der Befehlsdecodierschaltung (88) decodiert werden und daß der Zentraleinheit gemeldet wird, daß Daten im Schnittstellenregister zum Auslesen zur Verfügung stehen, und daß für den Datenverkehr von der Zentraleinheit (20) zum Dienstprozessor (28) das Schnittstellen-Pufferregister (86) von der Zentraleinheit mit Daten geladen wird, und daß ein spezieller Befehl vom Dienstprozessor (28) an die Wartungsschnittstelleneinrichtung (40) gegeben wird, der die Übertragung der Daten aus dem Schnittstellen-Pufferregister (86) zuerst in das Schnittstellenregister (84) und anschließend von dort zum Dienstprozessor (28) veranlaßt.

7. Verfahren nach Anspruch 6, dadurch gekennzeichnet, daß solange Daten im Schnittstellen-Pufferregister (86) zur Verfügung stehen, die Wartungsschnittstelleneinrichtung durch einen besonderen Befehl daran gehindert wird, andere Befehle als den zur Übertragung der Daten vom Schnittstellen-Pufferregister (86) in das Schnittstellenregister (84) auszuführen.

8. Verfahren nach Anspruch 6, dadurch gekennzeichnet, daß der Dienstprozessor (28) einen Befehl zur vorübergehenden Unterbrechung der Operationen der Zentraleinheit (20) ausgibt.

## Claims

1. Maintenance interface apparatus for a data processing system comprising a central processing unit and a service processor which includes circuitry for transmitting and receiving data, which cooperates with a user terminal, and which includes circuitry for generating commands, said central processing unit including a microprocessor operating asynchronously to the service processor, characterized in that

— the maintenance interface apparatus (40) is connected between said service processor (28) and said microprocessor (42), and is provided for exchange of data between user and central processing unit in a first mode of operation, as well as for supervision and testing by the service personnel in a second mode of operation,

— it comprises an interface register (84) which can be loaded only by said service processor (28) but which can be read by the service processor (28) as well as by the microprocessor (42), and further comprises an interface buffer register (86) which can be loaded only by the microprocessor (42) and furnishes its data to said interface register (84),

— a command decoder circuit (88) is connected to a command field (84b) in the interface register (84), and

— interface control and timing circuitry (41, 82) is provided for control and supervision of the data traffic as well as for furnishing, interrupting, or gating of different clock signals to individual operating areas of the central processing unit in dependency of the current operating mode, and selectively activatable test lines (104) for connecting particular functional elements of the microprocessor in a shift register arrangement.

2. Maintenance interface apparatus in accordance with claim 1, characterized in that said interface register (84) is built from bistable stages (240) each including a L1 bistable element (242) which can be connected as a portion of a shift register, and each further including an L2 bistable element (244) which is similary connectable, so that said interface register can selectively either be operated through a ring line (102) as a shift register, or be controlled by particular service processor clock signals (A, B) and be connected to the interface control circuitry, or cooperate as parallel register with the interface buffer register (86) and other functional elements.

3. Maintenance interface apparatus in accordance with claim 1, characterized in that additional selectively activatable test lines (112, 114) are provided for connecting, in a shift register arrangement, further selected functional units (44, 46) of the central processing unit to the maintenance interface apparatus.

4. Maintenance interface apparatus in accordance with claim 1, characterized in that the interface control and timing circuitry (41, 82) comprises means (116, 118, 316 . . . 301, 146, 148, 150, 610 . . . 634) for selectively distributing to functional units (42, 44, 46) of the central processing unit, either operating clock signals (C1, C2) generated in the maintenance interface apparatus, or test clock signals (A, B) received from the service processor.

5. Maintenance interface apparatus in accordance with claim 1, characterized in that the interface control and timing circuitry (41, 82) includes means (600, 602, 604, 606) for selectively generating inhibiting signals (SP CHAN, SP MP, SP MS) for functional units of the central processing unit, in response to control signals (ANF, SPERRE) from the service processor and in response to data bits contained in the interface register (84).

6. Method of operating the apparatus in accordance with claim 1, characterized in that for initiating data traffic from the service processor (28) to the central processing unit (20) the service processor issues commands to the maintenance interface apparatus (40), that commands and data are serially transferred into the interface register (84), that commands are decoded in the command decoding circuitry (88) and that the central processing unit is notified that data is available in the interface register for read-out, and that for data traffic from the central processing unit (20) to the service processor (28) the interface buffer register (86) is loaded, and that a particular command is issued from the service processor (28) to the maintenance interface apparatus (40), which causes the transfer of data from the interface buffer register (86) first into the interface register (84) and then from there of the service processor (28).

7. Method in accordance with claim 6, characterized in that as long as data is available in the interface buffer register (86), the maintenance interface apparatus is inhibited by a particular command to execute commands other than that for transferring data from the interface buffer register (86) into the interface register (84).

8. Method in accordance with claim 6, characterized in that the service processor (28) issues a command for temporarily interrupting operation of the central processing unit (20).

**Revendications**

1. Dispositif d'entretien d'interface, pour une installation de traitement de données comportant une unité centrale de traitement et un processeur de service pourvu de circuits d'émission et de réception de données; ce processeur coopérant avec un terminal d'utilisation et comportant des circuits pour élaborer des ordres; ladite unité centrale de traitement comportant en outre un microprocesseur qui fonctionne de manière asynchrone par rapport au processeur de service; caractérisé en ce que:

le dispositif d'entretien d'interface (40) est monté entre ledit processeur de service (28) et ledit microprocesseur (42), et est adapté pour opérer dans un premier mode de fonctionnement entre l'utilisateur et l'unité centrale de traitement, et pour opérer dans un second mode de fonctionnement en vue de la supervision et des tests effectués par le personnel d'entretien;

ledit dispositif comporte un registre d'interface (84) pouvant être chargé uniquement par le processeur de service (28), mais pouvant être lu par le processeur de service (28) ou par le microprocesseur (42), et comporte en outre un registre-tampon d'interface (86) pouvant être chargé uniquement par le microprocesseur (42) et fournissant les données qu'il contient dans ledit registre d'interface (84);

un circuit de décodage d'ordre (88) est relié à une zone d'ordres (84b) du registre d'interface (84), et

des circuits de commande et de chronologie d'interface (41, 82) sont prévus, pour commander et superviser le trafic des données, et pour fournir, interrompre ou acheminer divers signaux chronologiques destinés à des zones fonctionelles déterminées de l'unité centrale de traitement, suivant le mode de fonctionnement en cours, des lignes de test (104) pouvant être mises en service de manière sélective, pour relier certains éléments fonctionnels du microprocesseur à la manière d'un registre à décalage.

2. Dispositif d'entretien d'interface conforme à la revendication 1, caractérisé en ce que le registre d'interface (84) est constitué d'étages bistables (240) comportant chacun un basculeur bistable L1 (242) pouvant être connecté comme une partie d'un registre à décalage; chacun de ces étages bistables comportant également un basculeur bistable L2 (244) pouvant être connecté de la même manière, de sorte que ledit registre d'interface puisse sélectivement, soit fonctionner comme registre à décalage par l'intermédiaire d'une ligne en boucle (102), soit être commandé par l'action de signaux chronologiques spéciaux (A, B) du processeur de service, pour relier ledit registre au circuit de commande d'interface, soit coopérer en parallèle avec le registretampon d'interface (86) et avec d'autres éléments fonctionnels.

3. Dispositif d'entretien d'interface conforme à la revendication 1, caractérisé en ce qu'il comporte en outre des lignes de test supplémentaires (112, 114) pouvant être mises en services sélectivement, pour relier d'autres unités fonctionnelles choisies (44, 46) de l'unité centrale de traitement au dispositif d'entretien d'interface, à la manière d'un registre à décalage.

4. Dispositif d'entretien d'interface conforme à la revendication 1, caractérisé en ce que le système de commande et de chronologie d'interface (41, 82) comporte des moyens de répartition (116, 118, 316, ..., 301, 146, 148, 150, 610, ..., 634), pour acheminer de manière sélective vers des unités fonctionnelles (42, 44, 46) de l'unité centrale de traitement des signaux chronologiques de fonctionnement (C1, C2) produits par le dispositif d'entretien d'interface, ou des signaux chronologiques de test (A, B) provenant du processeur de service.

5. Dispositif d'entretien d'interface conforme à la revendication 1, caractérisé en ce que le système de commande et de chronologie d'interface (41, 82) comporte des moyens (600, 602, 604, 606) pour produire sélectivement des signaux d'interdiction (SP CHAN, SP MP, SP MS), destinés à des unités fonctionnelles de l'unité centrale de traitement, en réponse à des signaux de commande (ANF, SPERRE) émanant du processeur de service, et à des bits de données contenus dans le registre d'interface (84).

6. Procédé de mise en oeuvre du dispositif conforme à la revendication 1, caractérisé en ce que, pour amorcer le trafic des données émanant du processeur de service (28) à destination de l'unité centrale (20), le processeur de service envoie des ordres au dispositif d'entretien d'interface (40); en ce que les ordres et les données sont introduits en série dans le registre d'interface (84); en ce que les ordres sont décodés dans le circuit de décodage des ordres (88), l'unité centrale étant avertie que des données sont disponibles pour être lues dans le registre d'interface et le registre-tampon d'interface (86) étant chargé de données par l'unité centrale, en vue du transfert de données à partir de l'unité centrale (20) vers le processeur de service (28); et en ce qu'un ordre particulier est émis par le processeur de service (28) à destination du dispositif d'entretien d'interface (40), pour provoquer le transfert des données du registre-tampon d'interface (86), d'abord dans le registre d'interface (84) et de là dans le processeur de service (28).

7. Procédé conforme à la revendication 6, caractérisé en ce que tant qu'il existe des données disponibles dans le registre-tampon d'interface (86), un signal d'inhibition spécial empêche le dispositif d'entretien d'interface d'exécuter d'autres ordres que ceux qui servent au transfert des données du registre-tampon d'interface (86) dans le registre d'interface (84).

8. Procédé conforme à la revendication 6, caractérisé en ce que le processeur de service (28) émet un ordre pour interrompre temporairement le fonctionnement de l'unité centrale.

FIG. 1

FIG. 3

FIG. 2

FIG. 4

FIG. 5

FIG. 6

FIG. 8

FIG. 7a

FIG. 7b

FIG. 9

FIG. 10

FIG. 11

FIG. 12

FIG. 13

# FIG. 14

| | BEF | DATEN |
|---|---|---|
| | 0 1 2 3 | 0 1 2 3 4 5 6 7 8 9 10 11 12 13 14 15 |
| ERSATZ 0 | 0000 | |
| ERSATZ 1 | 0001 | |
| RESERVE 2 | 0010 | |
| RESERVE 3 | 0011 | |
| AUSN | 0100 | ← PARAMETER → ← HMC → ← KENNZ → |
| UBR | 0101 | ← PARAMETER → ← HMC → ← KENNZ → |
| CPU ST | 0110 | |
| RESERVE 7 | 0111 | |
| SPERRE | 1000 | |
| RESERVE 9 | 1001 | |
| A – TAKT | 1010 | |
| B – TAKT | 1011 | |
| ERSATZ C | 1100 | |
| ERSATZ D. | 1101 | |
| ERSATZ E | 1110 | |
| ERSATZ F | 1111 | |

0 010 194